# EUROPEAN PATENT SPECIFICATION

(11) **EP 0 625 070 B1**
(45) Date of publication and mention of the grant of the patent: **08.07.1998**
(21) Application number: 93900963.5
(22) Date of filing: 09.12.1992
(51) Int. Cl.: B01J 20/24, B01J 20/26

(54) **LOW DENSITY MATERIALS HAVING HIGH SURFACE AREAS AND ARTICLES FORMED THEREFROM FOR USE IN THE RECOVERY OF METALS**
MATERIALIEN MIT NIEDRIGER DICHTE UND HOHER SPEZIFISCHER OBERFLAECHE UND DARAUS GEFORMTE ARTIKEL ZUR VERWENDUNG IN DER METALLRUECKGEWINNUNG
MATERIAUX DE FAIBLE MASSE VOLUMIQUE PRESENTANT DES SURFACES IMPORTANTES, ET ARTICLES OBTENUS A PARTIR DE CES MATERIAUX, UTILISES POUR LA RECUPERATION DE METAUX

(30) Priority: 20.12.1991 US 811757
(43) Date of publication of application: 23.11.1994
(73) Proprietor: AlliedSignal Inc., Morristown, New Jersey 07962-2245 (US)
(72) Inventor: UNGER, Peter, D., Convent Station, NJ 07961 (US); ROHRBACH, Ronald, P., Flemington, NJ 08822 (US)
(74) Representative: Brock, Peter William
(86) International application number: PCT/US92/10567
(87) International publication number: WO 93/12877

(56) References cited:
- EP-A- 0 289 238
- EP-A- 0 424 672
- DE-A- 3 527 482
- FR-A- 2 282 905
- GB-A- 2 178 447
- US-A- 4 966 919
- KUNSTSTOFFE vol. 71, no. 3, March 1981, pages 183 - 184 KLAUS SCHNEIDER 'MIKROPOROESE POLYMERE'
- DATABASE WPIL Week 8631, Derwent Publications Ltd., London, GB; AN 86-200938

## Description

This invention relates to novel porous bodies which possess a relatively low density (generally less than 1.0 g/cm³, and a relatively high surface area (at least 85 m²/g) as well as one or more other beneficial properties such as pore volume and strength characteristics, all of which are favorable for many industrial applications, such as insulating materials, fibers, absorbents, adsorbents, ion-exchange resins, membranes and support materials for a wide variety of uses. The porous bodies have an open-celled 3-dimensional lattice structure. The novel bodies can be flexible, semi-rigid or rigid. The invention also relates to articles formed from the porous bodies, modified forms of the porous bodies, processes for preparing the porous bodies and articles formed therefrom. The highly porous low density articles can easily be modified chemically for a desired application, for example, filtration and recovery of organics or inorganics, specifically metals, as well as supports for immobilizing enzymes. The porous bodies can be prepared from polymeric materials. In many instances, the porous bodies of this invention are formed from hydrogels.

Numerous attempts have been made to make low density solid materials. For instance, low density materials have been prepared from aerogels. Aerogels have been made from iron and tin oxides, aluminas, tungsten, biopolymers and, more commonly, silicas. The first aerogels were produced in the early 1930's (Kistler, Stanford University) by exchanging the water in sodium silicate with an alcohol, and then removing the alcohol under high temperature and pressure [8.1 MPa (81 bars)/240°C].

Using the same basic original technique, it was possible to produce materials with densities in the range of 0.03 to 0.3 g/cm³. For further detailed information, refer to Kevin J. Anderson, " From Aquagels to Aerogels", Materials Research Society Bulletin, March 1991 During 1990, Hrubesh of The Lawrence Livermore National Laboratory modified the technique by using a condensed silica form, base catalyst and supercritical fluid extraction to achieve porous solids of silica aerogels having ultra low density of about 0.005 g/cm³(See Robert Pool Science, 247 (1990), at 807). One disadvantage of such materials is that at these densities the porous solids are expected to have limited strength properties. Secondly, the aerogels can be somewhat difficult to modify (chemically) for various commercial applications. Another disadvantage of the Hrubesh method is the use of the expensive supercritical fluid extraction procedure. Although alumina supports having densities of 0.3 g/cm³ or less can be prepared with special processes, the porous material obtained possesses minimal cohesive integrity and, thus, it tends to crumble under pressure. In fact, under microscopic examination, such alumina supports appear to be conglomerates or aggregates of particles held together by short-range electrostatic or hydrogen bonding forces.

Others have attempted to crosslink polymeric gel materials, such as chitosan. Japanese Patent Publication No. 61-133143 published June 20, 1986, by S. Tokura and K. Seo disclose a heavy metal adsorbing agent which is made by dissolving low molecular weight chitosan in acidic water solution and coagulating said solution in a basic solution to obtain porous chitosan and then crosslinking this using an organic diisocyanate compound. The chitosan product is noted as having a surface area of 84.6 m²/g.

EP-A-0289238 discloses a porous polymeric material having cell sizes within the range 100 to 0.5µm and total pore volume with respect to the overall volume of the material in the range 75 to 98% and includes crosslinked polycondensation polymeric material. The material can be made by crosslinking polymerization in a high internal phase emulsion, the crosslinked polycondensation polymer being formed in the continuous phase. The materials are preferably open interconnected cellular structures. They can be made of a wide range of polycondensation materials. The materials are thus highly porous and light weight and have a range of properties depending primarily on their constituent polycondensation materials.

EP-A-0424672 discloses the use of crosslinked porous chitosan as an endotoxin adsorbent. The material is obtained by dispersing an aqueous acidic soltuion of chitosan in a hydrophobic dispersant, evaporating the water while stirring, separating the resulting particulate chitosan and then crosslinking.

Various embodiments of the present invention provide:

A crosslinked, highly porous body obtainable by crosslinking a water-soluble, hydrogel polymer in the gel phase whereby said porous body has an open-celled three-dimensional lattice structure, a density of 0.01 to 1.0 g/cm³, a surface area of equal to or greater than 85 m²/g, and a compression strength of equal to or less than 50% yield at 2.17 MPa (300 psi) wherein said hydrogel polymer is selected from alginates, gums, agar, gelatins, collagen, polyvinyl alcohol, acrylate polymers, and mixtures and copolymers thereof.

A crosslinked, highly porous chitosan body obtainable by crosslinking a chitosan gel in the gel phase, whereby said porous body has an open-celled three-dimensional lattice structure, a density of 0.01 to 0.8 g/cm³, a surface area equal to or greater than 200 m²/g, and a compression strength of equal to or less than 50% yield at 2.17 MPa (300 psi).

A process for making a crosslinked, highly porous body comprising the steps of:
(a) dissolving a hydrogen polymer in a gelling solvent wherein said hydrogel polymer is selected from alginates, gums, agar, gelatins, collagen, polyvinyl alcohol, acrylate polymers, and mixtures and copolymers therof,
(b) forming a gel from the dissolved polymer solution into a desired configuration,
(c) gradually replacing said gelling solvent with a crosslinking solvent by employing a concentration gradient solvent exchange process,
(d) adding a crosslinking agent to crosslink said gel, and
(e) isolating said crosslinked gel from said crosslinking solvent, whereby said porous body has an open-celled three-dimensional lattice structure, a density of 0.01 to 1.0 g/cm³, a surface area of equal to or greater than 85 m²/g, and a compression strength of equal to or less than 50% yield at 2.17 MPa (300 psi).

A process for making a crosslinked, highly porous chitosan body comprising the steps of:
(a) dissolving chitosan in a gelling solvent,
(b) forming a gel from the dissolved chitosan solution into a desired configuration,
(c) gradually replacing said gelling solvent with a crosslinking solvent by employing a concentration gradient solvent exchange process,
(d) adding a crosslinking agent to crosslink said gel, and
(e) isolating said crosslinked gel from said crosslinking solvent, whereby said porous body has an open-celled three-dimensional lattice structure, a density of 0.01 to 0.8 g/cm³, a surface area of equal to or greater than 200 m²/g, and a compression strength of equal to or less than 50% yield at 2.17 MPa (300 psi).

methods for removal of metals provide an efficient technique for the removal of heavy metals, including precious metals and radioactive metals, such as uranium.

It is noted that the various materials and methods of this invention described herein can be used to remove inorganic and organic materials from fluid streams.
1. **Gel** - a colloid in which a dispersed phase is formed in a continuous phase, wherein said continuous phase is formed from a liquid and the colloid maintains a desired shape.
2. **Pre-gel** - colloid and solution having a dispersed phase in a continuous phase, said continuous phase formed from a liquid. A pre-gel is free-flowing and does not maintain a desired shape on its own.
3. **Gel-forming** any material capable of forming the **material** dispersed phase of a gel or pre-gel.
4. **Gelling Solvent** any material in the presence of which a gel-forming material can form a pre-gel or gel.
5. **Hydrogel** any gel-forming material which is capable of forming a pre-gel or gel in water.
6. **Body** a form of a 3-dimensional material having a size at least greater than a particle size of 0.5 cm in any dimension.

### DESCRIPTION OF THE DRAWINGS

Figure 1 is a schematic drawing which depicts a porous body of this invention and its open-celled 3-dimensional lattice structure.

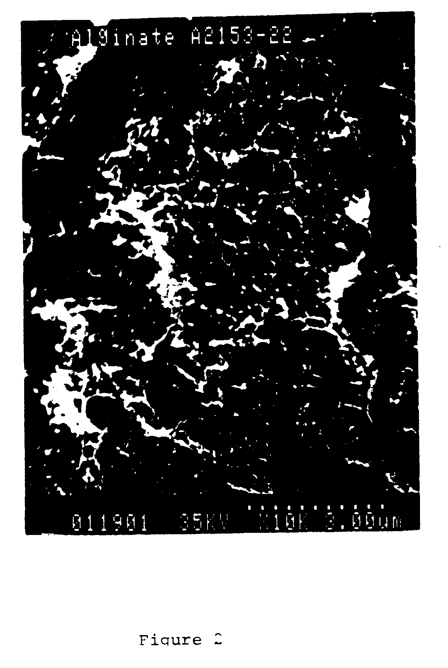

Figure 2 is an electron micrograph of a porous body formed from sodium alginate.

Figure 3 is schematic drawing showing an apparatus having therein a plurality of the porous bodies of this invention.

Figure 4 graphs the results obtained in Example 4.

Figure 5 is a graph of the results obtained in Example 8.

Figure 6 is a graph of the results obtained in Example 9.

Figure 7 is a graph of the results obtained in Example 10.

Figure 8 is a graph of the results obtained in Example 11.

Figure 9 is a graph of the results of Example 12.

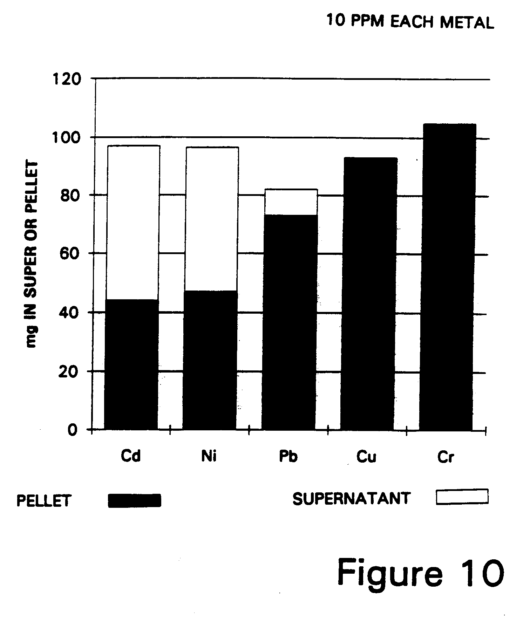

Figures 10 is a graph of the results of Example 13.

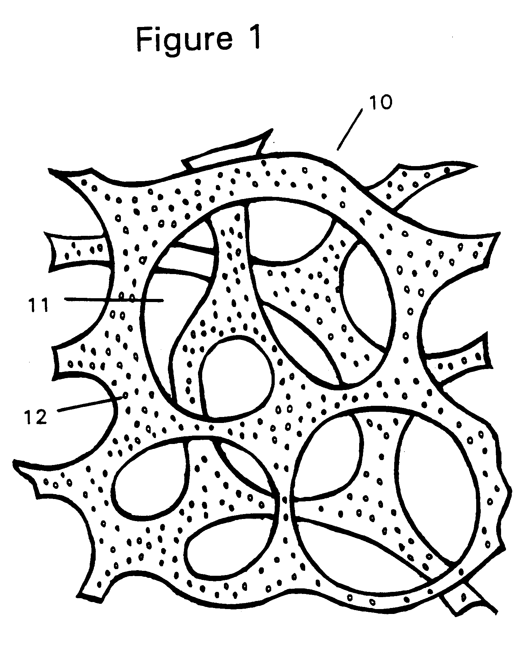

Figure 1 depicts a section of the open-celled 3-dimensional lattice of a porous body of this invention. The porous body 10 has pores 11 and 12 which form a continuous network of pores.

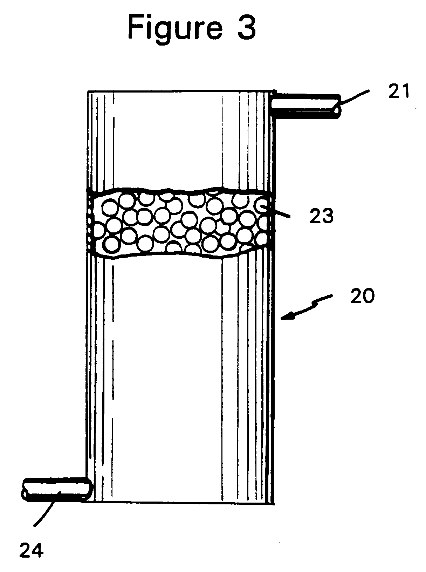

In Figure 3, an apparatus 20, is shown having an inlet means 21 and an outlet means 24. The apparatus 20 contains a plurality of the porous bodies (23) of this invention.

As noted, one embodiment of the invention relates to a porous body derived from a polymeric material, said body having a 3-dimensional open-celled lattice structure formed from a crosslinked polymer and a density of less than 1.0 g/cm³ and a surface area of at least 85 m²/g as well as articles formed totally or in part therefrom. The term lattice as used herein refers to an open framework of crosslinked polymer. Open-celled emphasizes the nature of the lattice structure itself and that the inner walls of the lattice structure form a network of open cells throughout the body (See Figure 1). Figure 1 depicts a section of a porous body 10 of this invention, the lattice structure formed by the crosslinked polymer and pores 11 and 12 that form the network of open-cells throughout the porous body 10. The pores may vary in diameter and size. The porous body possesses one or more beneficial properties. These beneficial properties include the relatively low density and high surface area of the body as well as relatively high pore volume and relatively small pore diameter. In addition, the porous body has excellent strength characteristics as exemplified by compression yield. The numerous beneficial properties of the body provide a material with virtually unlimited uses, such as support materials, fillers, absorbents, adsorbents, filters, fibers, membranes and many other applications. The density as well as other properties of the body can be adjusted to specifications for particular applications of the article.

The novel porous body of this invention can take on virtually any desired form. For example, it can be formed as a bead, pellet, cube, box-like rectangular shape, sphere, cylindrical body, such as a tube or fiber, or flat bodies such as sheets, membranes and coatings.

Generally, the body has a low density of less than 1.0 g/cm³. The density of the porous body is selected for the desired application as appropriate. In preferred embodiments, the density of the body is less than 0.8 g/cm³. In more preferred embodiments, the density is less than or equal to 0.6 g/cm³. In further preferred embodiments, the density is less than or equal to 0.5 g/cm³. In particularly preferred embodiments, the density is equal to or less than 0.3 g/cm³. In more particularly preferred embodiments, the density is equal to or less than 0.2 g/cm³. In further preferred embodiments, the density is equal to or less than 0.15 g/cm³. In alternative embodiments, the density can be as low as less than about 0.1 g/cm³ or even less than 0.05 g/cm³. However, preferably, the body has a minimum density which is at least sufficient to maintain the 3-dimensional lattice structure of the body. In many preferred embodiments of the invention, the body has a density of at least 0.01 g/cm³, and, preferably of minimum density of at least 0.02 g/cm³.

As noted, the porous bodies are lightweight, i.e. low density, but the novel materials of this invention also have excellent surface area characteristics. The beneficial surface area characteristics of the body can play a substantial factor in the utility of porous bodies and articles formed therefrom. For example, with a first material having more surface exposed than other materials, the available surface area for attachment of active agents, filtration or adsorption of materials is increased in the first material. An increase in surface area per gram of a material often minimizes the amount of material needed to perform a desired function. The ability of given amount of material to perform as an adsorbent can be viewed as a function of the amount of adsorption per gram of material. The more surface area per gram, the better the material will function as an adsorbent.

Generally, the porous open-celled 3-dimensional lattice body has a surface area of at least 85 m²/g. Preferably, said surface area is at least 150 m²/g. In further preferred embodiments, this surface area is at least 200 m²/g. In particularly preferred embodiments, the surface area is at least 250 m²/g. In more particularly preferred embodiments, the surface area is at least 300 m²/g, with the surface area of choice being at least 350 m²/g.

The open-celled nature of the porous bodies of this invention can be further characterized in part by pore volume and pore diameter.

The following pore volumes are noted to be of interest for practice of this invention. Preferably, the pore volume is at least 1 cm³/g. More preferably, the pore volume is at least 1.5 cm³/g. In further preferred embodiments, the pore volume is at least 2.0 cm³/g. In particularly preferred embodiments, the pore volume is at least 2.5 cm³/g. In more particularly preferred embodiments, the pore volume is at least 3.0 cm³/g. In alternative embodiments, the pore volume is at least 3.5 cm³/g. In the most preferred embodiments, the pore volume is at least 4.0 cm³/g.

The pore diameter can vary substantially to achieve a given pore volume. Generally, the open-celled lattice structure of the body has an average pore diameter of at least 5 nm [50 Angstroms (Å)]. In preferred embodiments, the average pore diameter is at least 10 nm (100 Å). In more preferred embodiments, the body has an average pore diameter of at least 20 nm (200 Å.) In particularly preferred embodiments, the average pore diameter is at least 25 nm (250 Å). In more particularly preferred embodiments, the average pore diameter is at least 30 nm (300 Å). In further preferred embodiments, the average pore diameter is at least 35 nm (350 Å) In alternatively preferred embodiments, the average pore diameter ranges from about 50°Å to 50 nm (500 Å)

In alternative embodiments of the invention, one can vary the average pore diameter to accommodate (or discriminate against) many different materials or specific applications. For example, in preferred embodiments of the invention one can use articles having an average pore diameter of 15 to 40 nm (150 to 400Å) to entrap or immobilize a specific molecule such as an enzyme within the pores of a shaped body. For other applications, such as forming insulation materials from materials of this invention, a relatively small pore 1 to 15 nm (10 to 150 Å) may be desired. For applications in which rapid diffusion is important, one can use a relatively large pore diameter, as needed. Control of the pore diameter also permits one to selectively discriminate molecules which are not to enter the pores of the body.

It is important to note that as the density of the material is decreased, the average pore diameter is observed to increase; thus, there will also be a range of pore diameters associated with a given density. However, the pore diameter can be varied by employing a "ghost" mold or imprint technique. The "ghost mold" or imprint technique involves adding to the gel a material (prior to, during, or after gelation) which can be removed from the gelled material at another period during processing. The ghost material creates a void of space when removed. It can be removed by conventional techniques known in the art, such as dissolving or chemically etching the "ghost" material from the porous body derived from the gel-forming material.

Surprisingly, in spite of the relatively low density of the bodies and articles formed therefrom, they also possess beneficial strength characteristics for a desired utility (e.g. support). The open-celled 3-dimensional lattice structure is believed to provide much of the strength. The porous body, e.g. a cube, pellet or bead, has a compressive strength such that, when subjected to pressure the body does not fall apart or collapse. Basically, the porous bodies of this invention have a relatively low amount of yield. A yield measurement for compression corresponds to a stress-strain curve which is measured for a given amount of pressure applied to a material of known dimensions. This curve reflects the amount of compression resulting from the applied pressure. See Sibilia's A Guide to Materials Characterization and Chemical Analysis VCM Publishers 1988, 273-275.

Preferably, the compression strength is equal to or less than 50% yield at 2.17 MPa (300 psi, pounds per square inch). In further preferred embodiments, the compression strength is equal to or less than 40% yield at 2.17 MPa (300 psi). In particularly preferred embodiments, the compression strength is equal to or less than 25% yield at 2.17 MPa (300 psi). In more particularly, preferred embodiments, the compression strength is equal to or less than 10% yield at 2.17 MPa (300 psi). In alternative embodiments, the compression strength is equal to or less than 10% yield at 7.0 MPa (1000 psi).

In the embodiments of this invention, the porous bodies have densities of less than about 1.0 g/cc. It should be noted that the density of the body is indirectly proportional to the strength characteristics of that body. At higher densities, the yield measurement (at a given applied pressure for an article) will be less than a yield measurement for an article having a lower density.

As discussed above, the porous bodies of this invention are derived from a polymeric material. The polymeric nature of the material is believed to provide the 3-dimensional lattice structure of the porous body. The polymer chains form the basic framework of the porous body and these polymer chains are crosslinked to an extent sufficient to maintain the polymer chains in the desired configuration. The polymeric materials have functional groups along the polymer which can form covalent bonds with corresponding functional reactive groups of a crosslinking agent. The number of functional groups along the polymer is sufficient to provide a crosslinked density throughout the 3-dimensional lattice such that the crosslinked material forms an open-celled 3-dimensional lattice structure which remains intact after removal of solvent from the crosslinked gel. Preferably, at least 2% of the functional groups along the polymer are crosslinked.

Preferably, the porous body is formed from a natural or synthetic gel-forming polymer. Natural polymers are polymers that are present in nature and include polymers which are isolated from living organisms. Synthetic as used herein refers to non-naturally occurring polymers produced by chemical methods, chemically modified natural polymers as well as materials produced by recombinant techniques. In further preferred embodiments of the invention, the porous body is formed from a hydrogel polymer, which may also be either natural or synthetic; however, natural hydrogel materials are preferred. In more preferred embodiments the hydrogel material is a protein, including glycoproteins, or a polysaccharide.

In additionally preferred embodiments, the polymer is a gel-forming material, such as a polysaccharide or protein. Illustrative of polysaccharides and proteins useful in the practice of the invention are chitosan, carrageenan, pectin, gelatin, collagen, locust bean gum, guar gum and agar. In further preferred embodiments, the gel-forming material is selected from naturally-occurring extracts. Illustrative of such materials are gelatin, chitosan and alginates, such as group I metal alginates, specifically sodium alginate, which is obtained from seaweed. Other useful gel-forming materials are conventional polymer gels used as thickeners, especially those which are used as additives in the food industry.

Synthetic polymers which may be used include polyacrylamides, polysulfones, polyols, such as polyvinyl alcohols and polyvinyl acetates and acrylate polymers, as well as crosslinkable polymers copolymers, such as polymethacrylates, polyvinylpyrrolidones and derivatives thereof. Preferred embodiments are directed to polymers formed from monomers which may be polymerized and crosslinked to produce hydrogels, such as the following monomers: the family of methacrylates including methyl methacrylate, methacrylic acid, hydroxyethyl methacrylate, hydroxyethoxyethyl methacrylate, hydroxydiethoxyethyl methacrylate, methoxyethyl methacrylate, methoxyethoxyethyl methacrylate, methoxydiethoxyethyl methacrylate, aminoethyl methacrylate propylene, glycol methacrylates and derivatives thereof. Some crosslinking agents which may be used for these monomers include ethylene glycol dimethacrylate, other dimethacryl monomers, divinylbenzene, etc. Other monomers which may be useful to form polymer hydrogels include vinyl alcohol, vinyl acetate, N-vinyl-2 pyrrolidone, sodium vinyl sulfonate, sodium styrene sulfonate, pyridine, acrylamide derivaties, acrylic acid derivatives, methylene-bis-acrylamide, crotonic acid, 2,4-pentadiene-1-ol, etc. These monomers may be polymerized and crosslinked to form polymers, copolymers, block copolymers and graft copolymers by conventional methods as known in the art. See Peppas, N.A., Hydrogels in Medicine and Pharmacy, CRC Press, Inc., Boca Raton, 1986.

In particularly preferred embodiments, the gel-forming material is a natural or synthetic form of gelatin, chitosan, alginates, agar or derivatives thereof. In more particularly preferred embodiments, the gel-forming material is derived from gelatin, chitosan, alginate or derivatives thereof such as metal salts. In the case of alginate, the sodium salt is the most preferred.

The porous bodies of this invention are preferably prepared by a novel process which employs a gel-forming polymer as a precursor material. Because a gel composition is predominantly a liquid, it has been difficult to remove the liquid component without causing the dispersed phase of gel-forming material to simply collapse, creating a material having a density which is which is greater than 1 g/cc. Generally, any potential structure, formed by the gel-forming material within the gel is substantially destroyed upon removal of the gelling solvent. The present invention provides a process which enables one to remove the gelling solvent from a gel and also maintain the dispersed phase of the gel in order to form a porous body having an open-cell 3-dimensional lattice structure. Since the gel is constituted mainly of the gelling solvent, once the solvent is removed, the resulting body has a relatively low density (i.e. less than 1.0 g/cc).

One novel process for preparing the porous bodies of this invention comprises:
1. forming a gel of a desired configuration;
2.
   (i) preparing the gel for crosslinking by replacing the initial gelling solvent directly or indirectly with a crosslinking solvent which does not react with a crosslinking agent by employing a concentration gradient of solvent to replace the gelling solvent;
   (ii) adding an effective amount of crosslinking agent; and
3. separating the crosslinked body from the crosslinking solvent.

In the preferred embodiments, the process for preparing the articles of this invention comprises:
1. forming a gel of a desired configuration;
2.
   (i) preparing the gel for crosslinking by replacing the initial gelling solvent with one or more intermediate solvents by employing a concentration gradient, and then replacing the intermediate solvent with a crosslinking solvent;
   (ii) adding an effective amount of crosslinking agent; and
3. separating the crosslinked body from the crosslinking solvent.

In an alternative embodiment, the process for preparing the articles of this invention comprises:
(1) crosslinking the gel-forming material of the gel by adding thereto an effective amount of a crosslinking agent, which is not reactive with the gelling solvent of the gel.
(2) removing the solvent from the crosslinked gel-forming material while maintaining the open-celled 3-dimensional lattice structure of the crosslinked gel-forming material to form a porous body which contains no or substantially no solvent.

The first step requires a gel as a starting material. Conventional methods of forming pre-gels or gels can be used. Some materials can be added to a gelling agent, and a free-flowing pre-gel naturally occurs. Many materials may require the addition of a pre-gel additive, which causes the formation of a pre-gel from the gel-forming material in the gelling solvent. Some pre-gels may require the use of a gelling agent to form a gel from the pre-gel state other gel-forming materials form a gel directly from a gel-forming material and gelling solvents. Other gel-forming materials form a gel directly from a gel-forming material and gelling solvents. In some instances, the gel-forming material forms a pre-gel or gel upon a gelling treatment step without a gelling agent. For example, agar will form a gel upon heating to at least about 80°C and cooling until gelation occurs. The methods of forming the pre-gels and gels are well-known in the art.

The starting amount of gel-forming material directly affects the density of the porous body. With an increase in the concentration of gel-forming material, the density of the porous body increases. An effective amount of gel-forming material is used. An "effective" amount is the concentration of gel-forming material in a gelling solvent which is sufficient to form a gel in a desired amount of gelling solvent. The effective amount of gel-forming material will vary with the selected density of the porous body.

The choice of pre-gel additive used varies with the choice of gel-forming material. An effective amount of pre-gel additive is that amount which is sufficient to cause a given amount of gel-forming material to form a pre-gel in a gelling solvent. The effective amount will vary with the amount of gel-forming materials used according by the known methods of preparation.

Preferably, once the pre-gel is formed, the pre-gel is centrifuged to remove air bubbles which may form during mixing and forming the pre-gel. This step aids in obtaining a substantially homogeneous porous body. A non-homogeneous porous body may contain an abundance of voids which may decrease physical properties such as strength.

The first step of the process comprises forming a gel of a desired shape. Shaping may be carried out by any conventional methods known in the art. A pre-gel can be placed in a mold of any desired shape and then treated by conventional methods to form a gel. For example, a layer of the pre-gel can be placed on a flat surface to form a sheet. The pre-gel can be expressed through an aperture to form a filament fiber or tube. The pre-gel is treated as it is expressed through the aperture to form the gel. A layer of pre-gel can also be placed on a cylinder to form a tubular shape. Thus, shapes can vary substantially to form any desired configuration (tubes, cubes, rectangular shapes, sphere, such as beads, pellets, sheets, which may be in the form of membrane).

Preferably, once a pre-gel is placed in a mold or shaped as desired, it is preferably exposed to a gelling agent to set or coagulate the gel in order to maintain the desired shape. A gelling agent interacts with strands of the gel-forming material of the pre-gel to orient the strands in an ordered state.

The pre-gels can be exposed to a solution of an effective amount of gelling agent. As used herein, an effective amount of gelling agent is that amount of gelling agent which is sufficient to set or coagulate the pre-gel such that the desired shape is maintained. As a gel the shape is no longer in a free-flowing state; it is self-standing, yet it is not in solid state. Appropriate amounts of gelling agent will vary in amount with the amount of each gel-forming material; however, each gel can be prepared by conventional techniques known in the art. For example, for sodium alginate,preferably, at least about .05 molar concentration of gelling agent is used. More preferably, a concentration of at least about 0.1 M of gelling agent is employed. In further preferred embodiments, the concentration of gelling agent is at least about 0.2M.

The setting or coagulation of the pre-gel step takes place over time. The amount of time required for this gelling to take place is dependent upon the diffusion of the gelling agent throughout the gel. The gel's viscosity (resulting from the amount of gel-forming material used in forming the gel) generally dictates the length of time needed for the movement of the gelling agent throughout the gel. The higher the concentration of gel-forming material in the gel, the longer the diffusion time will be. Gelling time may also involve a molecular rearrangement of the gel-forming material. To some extent the rearrangement will occur simultaneously with the diffusion of the setting agent through the gel. This rearrangement may also continue to occur after diffusion of the gelling agent through the gel. It is believed that without diffusion of the gelling agent throughout the gel, shrinkage or collapse of the gel can occur during the downstream process steps of forming the porous body. With the onset of shrinkage, density may increase (as surface area decreases) to a point above a desired level.

The choice of gelling agent will vary with the type of gel-forming material used therein. The gelling agent can be any agent which is reactive with the gel-forming material to set or coagulate the pre-gel. Often the gelling agent will be inorganic or organic acid or base, e,g. for chitosan and gums. On the other hand, in the case of alginate, an inorganic or organic cationic material is used to ionically bond the carboxylic acid moieties of the polymer strands of the alginate. Preferably, the gelling agent for alginate is a dicationic or polycationic inorganic or organic material which is able to ionically bond the carboxylic acid moieties of two adjacent polymer strands.

Sodium alginate can be gelled using organic acids or inorganic materials, such as di- or polycationic metals. The organic acids used for gelling alginate, e.g. sodium alginate, can vary widely. Illustrative such acids are acetic acid, propanoic acid, butanoic acid, benzoic acid, oxalic acid, malonic acid, succinic acid adipic acid, glutaric acid, maleic acid, phthalic acids and derivatives thereof. Preferably, a dicationic metal or a dicarboxylic acid is employed in order to link two strands of gel-forming material together. Cationic ions include ionic forms of and of the following: Al, Ba, Ca, Mg, Sr, Cr, Cu, Fe, Mn, and Zn. Most of the transition metals in the cationic form of X^{2+ or more} can also be employed Preferably the cationic metal is a cationic form of Ca, Ba or Cu.

The gelling agent or process used to gel the pre-gel depends on the gel-forming material used. For example, although chitosan is initially forms a pre-gel in acid solution, the chitosan is coagulated or set in a solution containing base to form a gel. Preferably, for chitosan, the solution of gelling agent is a dilute solution, which is at least about 2% base In further preferred embodiments, the base solution has a concentration of at least 5% base. In particular preferred embodiments, the base is solution at least about 10% base. Inorganic and organic bases may be employed dependent on the gel-forming materials selected. One inorganic base typically used is sodium hydroxide.

An alternative to using a gelling agent is a gelling treatment process. Illustrative of such a process is a rapid cooling treatment process. Such a process may be used in addition to a separate gelling technique. The rapid cooling technique, involves forming a pre-gel or gel and dropping the pre-gel or gel into a solvent bath which has been cooled to a temperature at least above the freezing point of the gelling solvent used in forming the gel. For hydrogel materials, generally, water alone is not used as a gelling solvent for the rapid cooling technique since water will freeze and will not diffuse out. Generally, a water/organic solvent mixture is used for applying the rapid cooling technique to hydrogels. In the case of alginate, a water/ethylene glycol (having at least about 25% ethylene glycol or organic solvent) can be used as the gelling solvent. The pre-gel or gel is then placed in a cooled bath of acetone. The acetone replaces the water/ethylene glycol solvent.

In the second step of the process of this invention, the gel is prepared for crosslinking by replacing the initial gelling solvent with a crosslinking solvent. The gelling solvent can be replaced directly with a crosslinking solvent or indirectly with one or more intermediate solvents and then with a crosslinking solvent. The crosslinking solvent should be miscible with the gelling solvent or intermediate solvent if an intermediate solvent is employed. The crosslinking solvent should also be non-reactive with gel-forming material and crosslinking agent. The surface tension of the crosslinking solvent can be less than, greater than or equal to the surface tension of the gelling solvent. Preferably, the crosslinking solvent has a surface tension substantially equal to the gelling solvent. This would obviate the necessity for solvent exchanges over a concentration gradient as discussed infra. In alternative embodiments, the crosslinking solvent has a surface tension which is less than the gelling solvent. In such embodiments, the crosslinking solvent may have a surface tension which is less than or greater than that of the intermediate solvent. In more preferred embodiments, the crosslinking solvent has a surface tension which is less than 7.5 N/cm (75 dynes/cm). In further preferred embodiments, the crosslinking agent has a surface tension equal to or less than 5.0 N/cm (50 dynes/cm). In particularly preferred embodiments, the crosslinking solvent has a surface tension equal to or less than 4.0 N/cm (40 dynes/cm). In more particularly preferred embodiments, the crosslinking solvent has a surface tension equal to or less than 3.0 N/cm (30 dynes/cm).

Illustrative of solvents useful in the practice of the invention are chloroform, dimethyl sulfoxide, pyridine and xylene. In many of the preferred embodiments, the crosslinking solvent is an aprotic organic solvent.

In alternative embodiments in which a crosslinking solvent has a surface tension greater than that of the gelling solvent, a concentration gradient as described supra is employed to replace the gelling solvent with the crosslinking solvent.

In many cases, a crosslinking agent may be reactive with a gelling solvent therein, the gelling solvent should be substantially, if not completely, removed from the gel prior to crosslinking. Reaction of the gelling solvent and crosslinking agent can diminish the crosslinking of the gel-forming material and/or prevent removal of the gelling solvent from the crosslinked gel. For example, the water in a hydrogel will react with a crosslinking agent such as, tolylene diisocyanate (TDI). The replacement of the gelling solvent with the crosslinking solvent is generally referred to herein as a solvent exchange step. The actual exchange to the crosslinking solvent from the initial gelling solvent may comprise one or more exchanges of the gelling solvent with an intermediate solvent or solvents prior to replacing the intermediate solvent with the crosslinking solvent.

Preferably, the solvent exchange process comprises replacing an initial gelling solvent, e.g. water, with an intermediate solvent of low surface tension, e.g. acetone. The intermediate solvent is selected such that is miscible with both the gelling solvent and with the subsequent intermediate solvent or crosslinking solvent. Preferably, the intermediate solvent has a surface tension which is lower than that of the gelling solvent. In more preferred embodiments the intermediate solvent has a surface tension of less than 7.5 N/cm (75 dynes/cm). In further preferred embodiments, the intermediate solvent has a surface tension equal to or less than 5.0 N/cm (50 dynes/cm). In particularly preferred embodiments, the intermediate solvent has a surface tension equal to or less than 4.0 N/cm (40 dynes/cm). In more particularly preferred embodiments, the intermediate solvent has a surface which is equal to or less than 3.0 N/cm (30 dynes/cm).

It is noted that if a crosslinking solvent has a surface tension greater than that of the gelling solvent, preferably, if an intermediate solvent is used the intermediate solvent has a surface tension which is less than the surface tension of the crosslinking solvent and greater than the surface tension of the gelling solvent.

If more than one intermediate solvent is used, then the intermediate solvent need only be miscible with the solvent used prior and the solvent used subsequently. For example, in the case of hydrogel, water can first be exchanged with acetone, which is miscible both with water and with a subsequent crosslinking solvent such as toluene. Acetone is one of the preferred intermediate solvents because of several considerations. Acetone is readily available and is relatively innocuous. It is also soluble in water and toluene. Other solvents which can be used include alcohols, such as methanol, ethanol, propanol and butanol, acetates, e.g. methyl and ethyl acetate, DMSO, DMF etc. Toluene is often selected as a solvent for crosslinking because it is an aprotic solvent with minimal affinity for water. It is also relatively non-reactive with the crosslinking reagents used herein.

In order to maintain the structure of the gel, without causing the shrinkage or collapsing of the gel upon removal of the gelling solvent, care must be taken when replacing the gelling solvent with the intermediate solvent. There may also be a need for a number of gradual solvent exchanges using the same intermediate solvent at various increasing concentrations, i.e. concentrations of intermediate solvent in solvent used prior or gelling solvent. The solvent exchange of the same solvent at gradual intervals is herein referred to a solvent exchange over a concentration gradient. The concentration gradient can be used to decrease stepwise the surface tension of the liquid component within the gel. Generally, an effective concentration gradient is an interval of changes in concentration of intermediate solvent which does not cause a collapse of the gel structure to the extent that the porous body cannot be formed or has a density greater than 1g/cc. If the gel collapses, a product of low density is not achievable. The set gel is exposed to one or more intermediate solvents in a graduated fashion employing an effective concentration gradient in order to avoid substantial shrinkage of the gel. More preferably, an initial concentration of intermediate solvent should range from about 5 to about 25% and the solvent exchanges over the concentration gradient can then take place with increases in concentration of 10% or more. The intermediate solvents are usually a mixture of the intermediate solvent and the gelling solvent until 100% intermediate solvent is exchanged.

In further preferred embodiments, the concentration gradient comprises employing an initial concentration ranging from about 10 to 25% and then the concentration of the intermediate solvent is stepped up at increases of from about 15 to about 25%. An incremental increase of 20-25% is particularly preferred to minimize the number of solvent exchanges. Once a substantially complete exchange of intermediate solvent for the initial gelling solvent is conducted, the intermediate solvent can generally be exposed directly to 100% of the crosslinking solvent. Although it is theorized that for most gel-forming materials no gradient is required for the exchange from the intermediate solvent to the crosslinking solvent, there may be a situation where a concentration gradient is used for the exchange of an intermediate solvent and a crosslinking solvent. Preferably, once the exchange to the crosslinking solvent is performed, a wash step is performed using the crosslinking solvent to remove any traces of intermediate solvent or initial gelling solvent which might interfere with the crosslinking reaction.

For each solvent exchange step, one should allow sufficient time for the replacement solvent to reach equilibrium. Equilibrium is the point at which the concentration of the replacement solvent inside the gel is in equilibrium with the concentration of the replacement solvent at the outer surface of the gel. Preferably, at least one solvent exchange is performed. In many of the preferred embodiments at least two solvent exchanges are performed. The number of solvent exchanges may vary thereafter from 2 to 10. For any exchange protocol, one attempts to minimize the number of steps used and the amount organic waste generated in each batch of exchanges. Generally, intermediate waste is reused, redistilled or separated to recover the solvents.

In alternative embodiments, additional techniques may be performed to prepare the gel for crosslinking. These techniques may be performed in addition to or instead of the solvent exchange processes. Although, these processes may be used instead of the solvent exchange, it may be preferable to perform at least one solvent exchange during or prior to such techniques. Illustrative of such alternate techniques are freeze-drying and supercritical fluid extraction. Freeze-drying is advantageous since a solvent exchange procedure should not be necessary. On the other hand, a supercritical fluid extraction can also be beneficial since water can be exchanged by this method with or without the need for intermediate solvent exchanges.

Freeze drying is a well-known procedure which is frequently used in the food industry to dry a material. A sample to be freeze-dried is a first cooled to a temperature below the freezing temperature of the solvent in which the gel-forming material is dissolved and then subjected to vacuum drying by methods known in the art. This causes the solid crystals to sublime.

Another technique which can be used in addition to or instead of the solvent exchange method is a super-critical fluid extraction process. Basically, this process involves extractions of the gelling solvent or intermediate solvent at high pressure using supercritical CO₂ in the liquid phase. Supercritical CO₂ is non-polar and can replace the solvent present in the gel. When the pressure is released, the CO₂ is evacuated from the porous material. This technique can be used in a similar way to that which is currently used for the preparation of inorganic aerogels, a method known in the literature. In using the freeze-drying method or supercritical extraction method, the dried material is then exposed to a crosslinking agent. The crosslinking agent can be provided as a solution or in a gas phase to form a crosslinked porous body. The solvent used in forming a solution of crosslinking agent can vary widely. Such a solvent or gas acts as a carrier vehicle for the crosslinking agent. Obviously, the carrier vehicle should be inert to the gel material and capable of solubilizing the crosslinking agent. The supercritical fluid extraction method may be a preferable procedure for making materials of very low density materials, i.e. less than about 0.05 grams per cc.

After the solvent exchange or alternative procedure for the solvent exchange is the crosslinking of the molecular polymer lattice of the gel-forming material. The choice of crosslinking agent will vary with the selection of gel-forming material. Similarly, the amount of crosslinking agent will vary with the amount of gel-forming material present in the set gel and the amount of crosslinking desired. The crosslinking agent is selected which is reactive to the functional groups present in the polymer backbone of the gel-forming material. Basically, any number of well-known chemical crosslinking agents can be selected for use in the crosslinking step. Illustrative of a crosslinking agent is the use of a diamine or polyamine as linkers for crosslinking hydroxyl and/or carboxylic moieties along a polymer backbone. For the purposes of this invention, often used are diisocyanate compounds. The diisocyanate compounds can be aliphatic or cycloaliphatic or aromatic. Aromatic diisocyanates, such as 2,4-tolylene diisocyanate, are preferred. In addition to aliphatic and aromatic diisocyanate crosslinking agent, many other compounds might find use for crosslinking hydroxyl-containing polymers. Examples of such compounds include diepoxides, epichlorohydrin, aldehydes and dialdehydes, trimetaphosphates, vinyl sulfones, urea-formldehyde systems and, di-halogenated aliphatics. Specific compounds include bis(hydroxymethyl)ethylene urea, N,N'-methylenebisacrylamide, 1,3,5-trichloro- and 1,3,5-triacryl s-triazine.

The final step of the process is to isolate the crosslinked polymer body from the crosslinking solvent. The fluid phase of the gel can be removed by a variety of techniques. A mixture of crosslinking solvent, any remaining unused crosslinking agent or side products of the crosslinking reaction may be simply drained from the solid crosslinked product. The reaction mixture containing the crosslinking solvent can also be removed by subjecting the crosslinked material to a vacuum step. Preferably, the solid crosslinked material that results from a crosslinking step is isolated and dried within a vacuum oven at a temperature of at least 20°C at a vacuum at least 2.49 to 124.54 kPa (10 to 50 inches of water) vacuum. The drying conditions are selected in order to effect rapid evaporation of any leftover solvents or volatile crosslinking agents inside the crosslinked gel body.

One of the additional advantages of the porous bodies of this invention and articles formed therefrom is the diversity of chemical modification which can be performed on the gel-forming prior to, during or after isolating the open-celled porous cross-linked body. The gel-forming materials have functional groups, such as -OH, -COOH, -OSO₃, and NH₂ which can be chemically modified by conventional reagents in the art. The number of functional groups which can be derivatized by chemical modification depends on the number of functional groups of the gel-forming material which are involved in the crosslinking. With less crosslinking, additional functional groups can be available for a desired chemical modification. The numerous modifications which can be performed on the functional groups of a gel-forming material make the range of applications for the porous bodies and articles of this invention almost endless. The articles can be modified for storage and transport of chemicals, for specific support applications, e.g. catalytic reactions or filter media, for insulation applications and for separation techniques. Alginic acid contains a substantial number of carboxyl groups, and chitosan contains a significant amount of free amine groups, both which are easily derivatized by numerous reagents. Both materials also contain abundant hydroxyl groups, which are available for chemical modification. Even if one crosslinks these materials using hydroxyl-specific reagents such as diisocyanates, sufficient free hydroxyls can survive the process intact and should be accessible for further reaction.

An additional embodiment of the invention relates to a method for the removal of one or more materials from a fluid stream comprising contacting the fluid stream with one or more of the porous bodies of this invention. Inorganic or organic materials can be removed. The porous bodies can be of any desired shape which is desired for a particular application.

One of the novel methods of this invention relates to a method for the removal of one or more metals from a fluid stream containing the metal or metals, which process comprises contacting said fluid stream containing one or more metals with one or more porous bodies of this invention. The methods for removal of metals provides an efficient technique for the removal of heavy metals, including precious metals and radioactive metals, such as uranium. The porous bodies can be placed in a vessel having an inlet and outlet means allowing for the inflow and outflow of a fluid stream.

The porous bodies can be loaded (placed) in a vessel, which may be an open flow-through column or a closed reactor, in any conventional manner. They can be used in a stirred tank reactor, fixed bed reactor or fluidized bed reactor. These types of reactors are well-known in the art. Hydrogels, such as sodium alginate and chitosan are known for their ability to bind metals. Normally, physical properties of these materials prevent their convenient implantation in metal remediation of aqueous wastestreams. However, when the gels are formed into porous bodies as described in this invention, they possess a physical form suitable to any type of column or reactor.

Novel methods of this invention relates to a method for the recovery of one or more metals from a fluid stream containing the metal or metals, which process comprises contacting said fluid stream containing one or more metals with one or more porous bodies of this invention and recovering the one or more metals. Recovery of the metals from the porous bodies can be accomplished by conventional means in the art. Metals can be separated from the porous bodies by passing a solution over the porus bodies which causes the metals to detach from the porus bodies. The metals can be removed together or selectively by varying the pH of the recovery solution. The methods for removal of metals provides an efficient technique for the recovery of heavy metals, including precious metals and radioactive metals, such as uranium.

One application is the use of the materials of this invention as ion-exchange resins. For example, a porous body derived from chitosan or alginate can be converted to a cation exchange resin by derivatizing free hydroxyl groups with chlorosulfonic acid/dry pyridine to yield the following derivative:

XL[Algin/Chitosan]- OH + ClSO₃H/pyridine > XL[Algin/Chitosan]- OSO₃ + pyridine.HCL

wherein XL = crosslinked

Another example would involve the addition of a phosphate ester across free hydroxyl groups in alginate or chitosan, using phosphorus oxychloride/pyridine:

XL[Algin/Chitosan] - OH + POCL₃ > XL[Algin/Chitosan]- O - POCL₂

XL[Algin/Chitosan]- O - POCL₂+H₂O > XL[Algin/Chitosan]- O -PO₃²⁻ (H⁺)₂

Algin or chitosan xanthates may also be prepared by the reaction of crosslinked material with carbon disulfide in a concentrated solution of sodium hydroxide:

[R-OH]n + nNaOH > [R-O⁻, Na⁺]n

[R-O⁻, Na⁺]n + nCS₂ > [R-O-CS₂⁻, Na⁺]n + nH₂O

wherein R is a gel-forming material having plurality of OH groups.

These derivatization chemistries only serve to point out the varied possibilities for introducing ion-exchange capacity. Many different chemistries for making anionic/cationic ion-complexing resins are well-known in the art as well as other derivatization chemistries for other applications.

Alternatively, one could couple a polymer which possesses additional functional groups to the porous body and then derivatize these functional groups as described above. In this way, one could substantially increase the versatility of the porous body to perform a desired function.

The backbone of the gel-forming material can also be derivatized in a myriad of other ways. For example, the hydrophobic/hydrophilic index of the material can be altered by derivatization of available hydroxyl groups with a hydrophobic or hydrophilic compound. For example derivatizing hydroxyl groups with phenyl isocyanate would yield a more hydrophobic material than the unmodified crosslinked gel.

The crosslinked porous materials of this invention can also be used as a carrier or support matrix for active agents. An active agent is a natural or synthetic material which has an activity to perform a reaction or function. Active agents can be added at any time during the preparation of the crosslinked porous body or after preparation of the porous body, e.g. as a coating. In preferred embodiments,the active agent is mixed with a selected gel-forming material without a substantial loss of its activities, and the combined composition is then gelled and crosslinked pursuant to the process of this invention. The active agent within the crosslinked porous body can then be used in applications where the properties of the porous body, such as strength, porosity or low density, are needed. Illustrative of active agents which have limited use because of their physical attributes are various biologically derived materials, which are either whole cells or fractions thereof, that posses the ability to sequester various metals with unexpected selectivity and capacity. A drawback has always been the physical form of these materials; either they were in powdered form or in the form of a gelatinous mass. One can put these complexing agents into a useful form so as to serve a practical industrial function by entrapment within and/or attachment on the gel-forming materials.

The crosslinked porous bodies of this invention, whether modified or not, have low density and other excellent physical characteristics, such as a desirable pore volume and/or pore size. Practically, this means that there is a great deal of empty space within the material which can be utilized to hold or contain other materials which can be added to it. A factor which renders this property of great commercial interest is that, despite their low density and useable internal volume, the crosslinked have beneficial strength characteristics. One way to exploit the unusual properties of the porous bodies of this invention is to use the empty space for absorption of materials. For example, the porous body can be impregnated with the an active agent to facilitate and/or enhance the absorption of a desired material.

Another way that crosslinked porous bodies of this invention can be employed is to introduce additives, such as antibacterials, plasticizers, stabilizers, antioxidants, etc., into plastics materials by adding these additives within a crosslinked gel as microcapsules. Currently, plastic additives are physically mixed into precursor materials at some point during the processing. The net effect of this is to weaken the modulus of the polymer material because of mitigation of the structural components of the mixture. This loss in strength requires that structural fillers and reinforcements also be added to make up for the weakening effects of the additives. By loading the porous body with additives to form microcapsules, and adding these microcapsules to the plastics precursors, the overall weakening effects of the addition the additives should be much less than when the additives are added directly since the additives enclosed within the microcapsule are segregated from the structural components of the plastic. Furthermore, the microcapsule can be modified to control the release of specific amount of additive, thereby increasing the useable lifespan of the plastic. One limitation of most plastics is that when the additives are exhausted from them, due to migration to the surface and loss, the plastic loses the properties conferred onto it by that additive. Thus, plastics can be improved by controlling the rate of loss of an additive, such as an antioxidant or plasticizer.

Compositions with enhanced capacity and/or selectivity for a metal or metals may be formed by adding active agents which are metallophilic materials to the gel-forming compositions. Metallophilic as used herein refers to materials having a beneficial metal-binding ability. These metallophilic materials may be naturally-occurring biological materials or synthetic compounds known in the art for use in metal removal and recovery, such as oximes. Preferably, the metallophilic materials possess a metal-binding ability which is sufficient to remove the metal or metals from a desired fluid stream. In preferred embodiments, the metallophilic materials are naturally-occurring biological materials. Compositions comprising naturally-occurring biological materials and at least one porous body of this invention are referred to as biocompositions. A wide range of biocompositions can be made by incorporating bioactive materials into the alginate/chitosan crosslinking mixture. Illustrative of such materials are activated sludge, blue-green algae, tannic acid, humic acid, and other biological materials. Such materials can be mixed in with a gel-forming material. The gels are then solvent exchanged and chemically crosslinked essentially as previously described. By carefully selecting additive components in this way, a family of new bioabsorbents tailored to the efficient treatment of specific metal-bearing wastestreams can be introduced.

Another field for application of the materials of this invention is carbonization. Natural gas is a clean energy source, which is abundant in this country. One factor which precludes its use as a fuel for automobile engines, and other engines which currently use petroleum-based fuels, is difficulty in the safe storage and transport of the gas. It has been found that carbonization of certain polymers produces materials which adsorb or immobilize natural gas. The gas, when adsorbed onto solid carbon materials, is much less hazardous, and it's even feasible to consider the use of adsorbed natural gas to power motorized vehicles. Unmodified or modified forms of the crosslinked porous bodies of this invention can also absorb and deliver natural gas.

The crosslinked gel of this invention can also be used as templates. If the crosslinked gel has a physical limitation in view of a particular use, a template application may be used to incorporate beneficial properties of the crosslinked gel into another material. For example, the gel can be used as a template onto which a layer of inert inorganic material of superior strength or heat resistance may be deposited. After deposition of the inorganic crust, then the gel template may be etched away, or chemically digested for removal, leaving a 'casting' of inorganic material which retains the pore characteristics and large surface area of the original template. One template technique is noted as follows: 1) polymerize styrene onto the inner surfaces of crosslinked hydrogel,in effect forming a skin impression of all the pores and surfaces of the template, 2) deposit a layer of carbon onto the styrene polymer, 3) silanize the carbon layer and heat slowly to about 300 C. This should form a layer of silicon carbide, even at this low temperature. The crosslinked polysaccharide can then be acid etched away, or chemically digested with peroxides, etc. Silicon carbide is an extremely strong material, which can serve as an excellent catalyst support. The high surface area properties of the template crosslinked hydrogel, combined with its ease of removability, make these materials ideal candidates for use as templates. The following examples are merely illustrative of our invention and should not be considered limiting in any way.

### Procedures for Measuring Properties of the Materials

Surface areas were determined by nitrogen adsorption. Samples were first degassed for 16 hours in a helium atmosphere at 50°C. Adsorption/desorption measurements were made on a Quantasorb sorption systems, a continuous flow gas chromatographic instrument, manufactured by Quantachrome Corp., Syosset, NY. Values reported are based on single point measurements at liquid nitrogen temperature, 78K, and 0.3 partial pressure of nitrogen in helium with a total flow rate of 20 cm³/min. The surface areas were calculated using the BET (Brunaner, Emmett and Teller) isotherm following the procedure recommended by the equipment manufacturer.

The apparent bulk density, pore volume and average pore diameter were determined by mercury porosimetry. Samples were first degassed for 16 hours in a helium atmosphere at 50°C. Measurements were made on a Autopore 9210 mercury porosimeter manufactured by Micromeretics, Norcross, GA. Measurements were taken over the pressure range 20 to 60,000 lb/in² (138,000 to 410,000,000 Pa) at 60 points with roughly equal logarithmical spacing. Pressures are converted to pore diameters via the Washburn equation where the surface tension of mercury, 48.5 N/cm (485 dyne/cm) and the contact angle, 140°, are assumed. The corresponding pore diameters go from 10 µm to 3.6 nm. The apparent bulk density is measured at 20 lb/in² (138,000 Pa). The pore volume includes those pores filled as the pressure changes over the range of the experiment. The average pore diameter is defined as four times the ratio of the pore volume to the total pore area, where the pore surface for pores of a given diameter is calculated from the incremental pore volume assuming cylindrical shape. Procedures followed for operation and analysis were those recommended by the manufacturer of the porosimeter.

Generally, the procedure used for determination of compressive properties of the crosslinked materials is that described in the 1982 ANNUAL BOOK OF ASTM STANDARDS; Part 36, Plastics- Materials, Film, Reinforced and Cellular Plastics; High Modulus Fibers and Composites: pp. 169-172, ASTM Designation: D 1621 - 73 (Reapproved 1979): ASTM, Philadelphia, PA. This procedure provides information regarding the behavior of rigid cellular materials under compressive loads. Deformation data can be obtained, and from a complete load-deformation curve it is possible to compute the compressive stress at any load, and to compute the effective modulus of elasticity. The procedure is described briefly, as follows: Cubes of crosslinked material were measured in all dimensions to an accuracy of +/- 1%, and placed between the mounting plates of a Universal Instron Machine. A load was applied to the specimen in such a manner that it was uniformly distributed over the entire loading surface of the specimen. The rate of crosshead (deflection) movement was 2,54 +/- 0.25 mm/min (0.1 +/- 0.01 in./min). As loading pressure was applied, specimen deformation was measured, and the amount of deformation was recorded using an automatic recorder. The resulting compressive stress-strain diagram, in which values of compressive stress are plotted as ordinates against corresponding values of compressive strain as abscissas, were used to describe the compressive properties of the crosslinked materials disclosed herein.

### EXAMPLE 1

### 1. PREPARATION OF A POROUS BODY (MATRIX) FROM CROSSLINKED ALGINATE

Five grams of sodium alginate were added to 100 ml distilled water to yield a 5% solution. After addition of the sodium alginate, the solution was allowed to hydrate for 16 hrs. The fully hydrated polymer was then centrifuged to eliminate air bubbles. The viscous solution was exposed to a 0.2M calcium chloride solution to set or coagulate into a gel. Following completion of the setting step, the gel was cut into cubes of about 1 cc volume and then calcium alginate cubes were then washed thoroughly in water to remove excess calcium chloride and the calcium alginate cubes were exposed to a solution comprised of 25% acetone in distilled water (v/v). After equilibration, the 25% acetone water solution was decanted and replaced with a 50% acetone/water solution. The 50% acetone/water solution was decanted after equilibration and replaced with 75% acetone/water. Following equilibration in this solvent mixture, the solvent mixture was replaced with 100% acetone. The cubes were then equilibrated in 100% toluene, and crosslinked by the addition of 3.3 ml of 2,4-tolylene diisocyanate (TDI). Triethylamine was added as a base catalyst. The solution was heated to 100-110°C, and allowed to react for about 16 hrs. Following crosslinking, the material was washed in fresh toluene and dried in a vacuum oven. The following table lists various physical properties of the final product.

| PROPERTIES OF THE CROSSLINKED ALGINATE | |
|---|---|
| Apparent Bulk Density | 0.164 g/cm³ |
| Surface Area | 380 m²/g |
| Pore Volume | 2.97 cm³/g |
| Average Pore Diameter | 365 Angstroms (36.5 nm) |
| Compressibility | 10% yield at 347 psi (2.39 MPa) |

### EXAMPLE 2

### PREPARATION OF A POROUS BODY FROM CROSSLINKED CROSSLINKED ALGINATE (Scale-up)

30 grams of high viscosity sodium alginate were added to 600 ml distilled water. The viscous 5% Sodium alginate solution was allowed to hydrate for 16 hr. The solution was then centrifuged at 2000 RPM for 30 min to remove air bubbles. Calcium chloride solution (0.2 M) was then poured over the viscous hydrocolloid solution to form the gel. The gel was allowed to set for 16 hr., and the fully set gel was then sliced into cubes of approximately 1 cm³ volume. The cubes were then washed and solvent exchanged as described in Example 1. The exchanged material was crosslinked with 20 ml of 2,4 -tolylene diisocyanate in the presence of a catalytic amount of triethylamine. Crosslinking was performed at a temperature of 100 -110°C, as described in Example 1. Following crosslinking, the material was washed in fresh toluene, and dried in a vacuum oven. The apparent bulk density and surface area of the final material was then determined.

### EXAMPLE 3

### PREPARATION OF A POROUS BODY FROM CROSSLINKED CHITOSAN

5 grams of chitosan flakes were dissolved in a solution of dilute acetic acid (96 ml distilled water + 3.75 ml glacial acetic acid). The flakes were allowed to fully hydrate, and the viscous solution was centrifuged to remove air bubbles. The gel was then made by contacting the viscous hydrocolloid with a solution of 10% (w/w) sodium hydroxide for 24 hr. The gel was then sliced and washed in distilled water to remove excess NaOH solution. The washed slices were then solvent exchanged into toluene as described in Example 1, and crosslinked with 2,4-TDI as described above. The crosslinked product was then dried in a vacuum oven, and ground to a powder up to 0.42 mm in size (40 mesh or less). The table below lists the physical properties of the final product.

| PROPERTIES OF CROSSLINKED CHITOSAN | |
|---|---|
| Apparent Bulk Density | 0.0877 g/cm³ |
| Surface Area | 364 m²/g |
| Pore Volume | 4.386 cm³/g |

### EXAMPLE 4

### OPTIMIZATION OF THE SOLVENT EXCHANGE PROCEDURE USED TO PRODUCE LOW-DENSITY POROUS BODIES FROM CROSSLINKED HYDROGELS

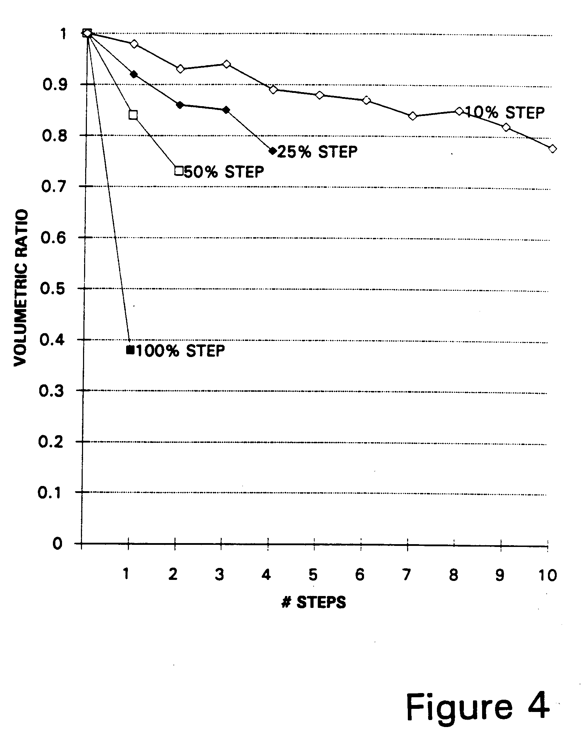

In order to optimally crosslink hydrogel materials with many suitable industrial crosslinking agents, the water in the initial hydrogel is replaced with a crosslinking solvent. We have chosen toluene as a suitable representative crosslinking solvent. Prior to replacing the water with toluene or another crosslinking solvent, it is often advantageous to replace the water with an intermediate solvent which is aprotic and has a surface tension less than that of water and above that of the crosslinking solvent. Acetone was selected as an intermediate solvent. It is was observed that abrupt exposure of a hydrogel to high acetone concentrations resulted in partial shrinking of the gel, which should be avoided to maintain a low density material. In order to minimize solvent use without substantially shrinkage the gel, the maximum step-size increase in concentration of intermediate solvent (in water) sustainable by the gel without collapse had to be determined. This was done by making four crosslinked gels using the same materials except that different concentration gradients were used to achieve the replacement of water with pure acetone. For an example, the water of the hydrogel was replaced directly with pure acetone (100%). In the other three samples, concentration gradients of 10%, 25% and 50% were used. For each gradient, the concentration of intermediate solvent (acetone) in the hydrogel was increased incrementally to 100%, e.g. nine equal incremental steps from 10% acetone in water to reach 100% acetone in the gel. To assess gel shrinkage, the initial pellet diameters of a representative population (n = 10) were measured, and the pellets were then exposed to the next step up in acetone concentration. The pellet diameters were remeasured after a 15 minute equilibration period and the process was repeated until the pellets were in 100% acetone. Finally, the pellets were placed directly into 100% toluene (the final solvent for crosslinking), or washed further with fresh acetone before exposure to toluene. The results shown in the Figure 4, indicated an unambiguous relationship between step-size and gel shrinkage. Exposing the pellets directly to 100% acetone resulted in a greater than 60% reduction in volume. Taking the acetone concentration to 100% in two steps (50%/step) resulted in less than about than 25 shrinkage. About 24% shrinkage was observed in pellets taken to 100% acetone in four steps (25% step); whereas increasing the acetone to 100% in ten steps (10% each step) resulted in only about 20% shrinkage of the gel. Furthermore, it was found that the pellets could be exposed directly to 100% toluene with little additional shrinkage. The complete changeover to acetone, therefore, may be effected in as little as four incremental steps (25% acetone/water, 50% acetone/water, 75% acetone/water, 100% acetone). This stepwise solvent exchange results in a practical approach to minimize solvent use. Also, since the exchanges are carried out in a batch format, spent wash solutions may be reused for subsequent exchanges. These results are important because they mean that complete exchange from water to toluene may be performed using minimal solvent quantities, and without generating enormous amounts of organic solvent waste.

### EXAMPLE 5

### PREPARATION OF ULTRA-LOW DENSITY POROUS BODY FROM CROSSLINKED ALGINATE

A 0.25% solution of sodium alginate was fully hydrated in 100 ml of distilled water. The hydrated solution (pre-gel) was then transferred to a syringe and centrifuged to eliminate air voids within the gel. The pre-gel was then introduce drop-wise into a solution of 0.2 M calcium chloride, and the resulting pellets were allowed to coagulate. The calcium solution was then decanted, and the calcium alginate pellets were washed in a large excess of distilled water to remove excess calcium chloride solution. Following the wash step, the pellets were solvent exchanged to toluene, and crosslinked with 2,4-TDI as described in Example 1. The pellets were then freeze dried by transferring the pellets to freeze drying flasks, freezing at -20°C and then lyophilizing for about 12 to 16 hours. The density, surface area and pore characteristics were measured.

| PROPERTIES OF ULTRA-LOW DENSITY CROSSLINKED ALGINATE | |
|---|---|
| Apparent Bulk Density | 0.042 g/cm³ |
| Surface Area | 200 m2/g |
| Pore Volume | 2.917 cm³/g |
| Pore Area | 226 m2/g |
| Average Pore Diameter | 5.17 nm (517 Angstroms) |

### EXAMPLE 6

### PREPARATION OF CROSSLINKED ALGINATE USING A QUICK-COOLING TECHNIQUE TO SET THE INITIAL GEL

Fifty milligrams of sodium alginate were added to 10 ml of 58% ethylene glycol in water, and the mixture was allowed to gel. The fully hydrated gel was then extruded dropwise into 100 ml of precooled acetone (-40°C, on dry ice). The rapid transition to this temperature caused the alginate gel to become rigid, but the gel did not freeze because of the ethylene glycol in the gel mixture. The extruded pellets were allowed to stir for about 1/2 hour in the cold acetone, and then the wet acetone was decanted and the pellets were transferred to a 100 ml pear-bottom flask containing 80 ml of pre-cooled, dry acetone, kept under nitrogen. The flask was allowed to warm to about 22°C and then the gel was crosslinked with two additions of molar excess of 2,4-TDI. The final bulk density of the dried material was about 0.028 g/cm³

### EXAMPLE 7

### PREPARATION OF CROSSLINKED ALGINATE USING DILUTE ORGANIC ACID AS A GELLING AGENT

A 2% sodium alginate solution (12ml) was extruded dropwise into 200 ml of 10% acetic acid (v/v). The pellets were allowed to set overnight, washed with water to remove excess acetic acid, and then subjected to the solvent exchange and TDI crosslinking procedures described above. The pellets were freeze-dried overnight, as noted in Example 5, and the final bulk density of the unground pellets was about 0.031 g/cm³

Other organic acids capable of gelling the sodium alginate include adipic and formic; however, a simple mineral acid such as HCl had the opposite effect of substantially destroying the gel completely.

### EXAMPLE 8

### EFFECT OF INITIAL GEL CONCENTRATION ON THE FINAL DENSITY OF THE CROSSLINKED MATERIAL

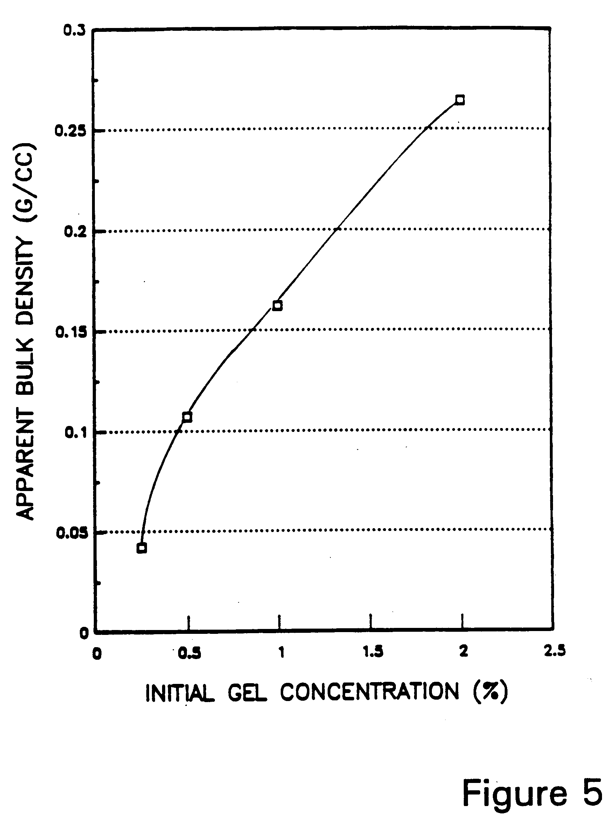

The effect of the initial gel concentration on the final density of crosslinked material was determined by preparing a series of gels of increasing concentration, and comparing the densities of the final dried, crosslinked products. Gels were prepared with initial concentrations of 0.25%, 0.5%, 1.0% and 2.0% (w/v) were prepared. The gels were set as pellets by dropwise introduction into a solution of 0.2 M CaCl₂, generally as described in Example 5. The calcium alginate pellets were then solvent exchanged and crosslinked with 2,4-TDI as described in Example 1. Following crosslinking, the reaction solution was decanted, and the pellets were dried. The dried materials were then ground to a particle size of less than 0.84 mm (20 mesh) and the apparent bulk densities (ABD) were measured. As can be seen in Figure 5, the final ABD of a given material was highly dependent upon the concentration of the starting gel from which it was made. The significance of these findings is that the final density of a material can be controlled by selecting an initial gel concentration which will yield the desired density.

### EXAMPLE 9

### RELATIONSHIP BETWEEN DENSITY AND PORE SIZE OF THE POROUS BODIES FORMED FROM CROSSLINKED GELS

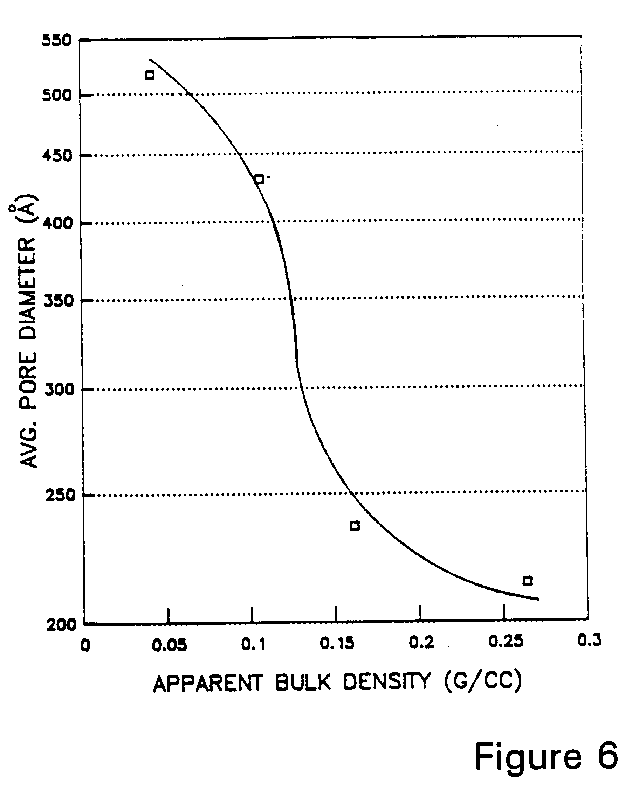

Mercury porosimetry was performed on the same four samples described in the preceding example. The intent was to determine whether or not a relationship existed between the final ABD of crosslinked alginate and the average pore diameter of the material. As can be seen in Figure 6, such a relationship does exist. As the apparent bulk density decreases, the average pore diameter is seen to increase, within the ranges investigated. These results imply one would be able to, within limits, control the pore diameter of the final crosslinked material. For example, if a specific application requires pore diameters in the 20 to 30 nm (200 - 300 angstrom) range (ideal for immobilized enzyme supports), then one could process gels of the appropriate initial concentrations to yield a final product with a final density of about 0.15 g/cm³ or greater.

### EXAMPLE 10

### RELATIONSHIP BETWEEN DENSITY AND SURFACE AREA OF POROUS BODIES FORMED FROM CROSSLINKED BIOHYDROGELS

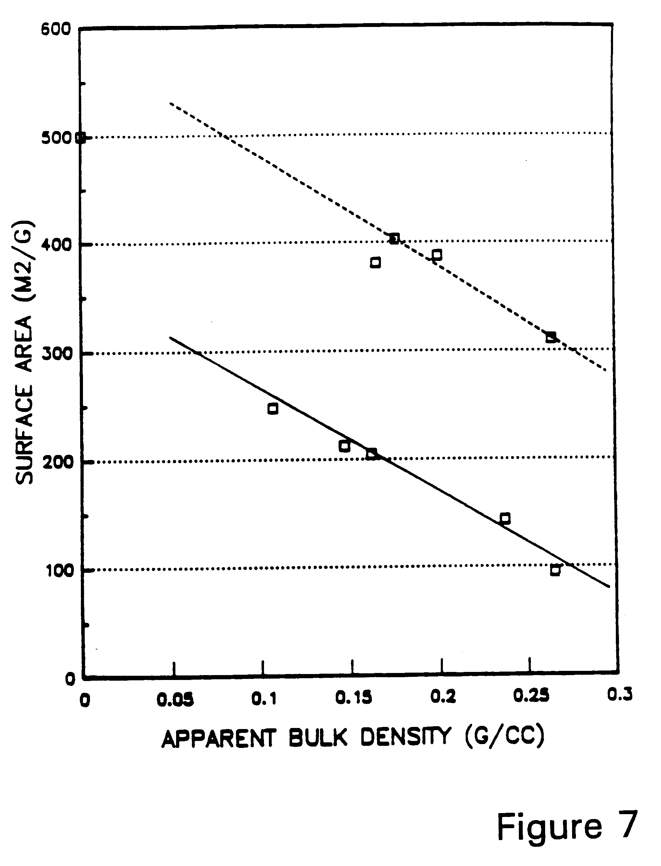

The surface area of several crosslinked alginate samples of varying densities was measured in order to determine if there was a definable relationship between surface area and density. As can be seen in Figure 7, a relationship between ABD and surface area exists. The data points arrayed along the two lines (solid and dashed) represent two families of materials which had different processing conditions. The samples along the solid (lower) line were processed as pellets, and were freeze-dried after crosslinking with 2,4-TDI . The data points along the dotted (upper) line were processed as cubes and were dried in a vacuum oven. For a specific application, material with a minimum surface area of, say, 300 m²/g may be required. By careful selection of initial gel concentration and processing technique, then, it is possible to produce material with a surface area in this desired range.

### EXAMPLE 11

### UTILITY OF VARIOUS NATURALLY-DERIVED HYDROGELS FOR THE PRODUCT OF CROSSLINKED GELS

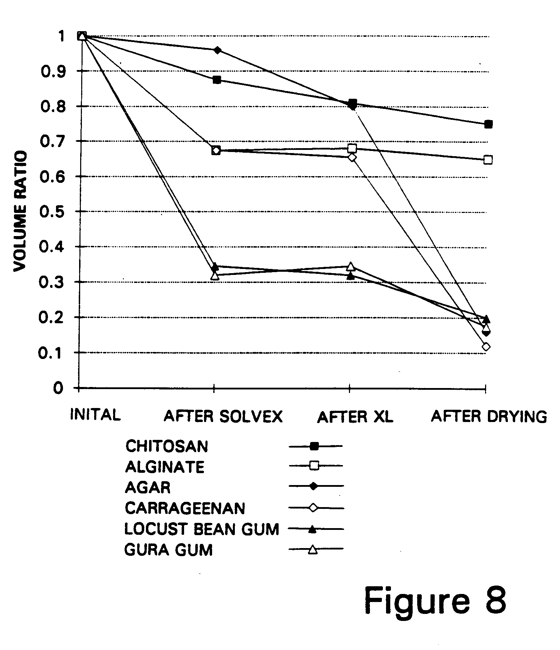

Various naturally-derived hydrogels were tested for their ability to form low-density crosslinked materials. The following materials were tested; Sodium Alginate, Chitosan, Agar, Carrageenan, Locust Bean Gum, Guar Gum, Gum Arabic, Gum Ghatti, Pectin, Tragacanth, and Xanthan Gum. Dissolving Gums Arabic, Ghatti, Tragacanth and Xanthan in distilled water resulted in the formation viscous solutions, but no good gelling procedure was found for any of them. Pectin was gelled using the following procedure: To 100 ml distilled water was added 5 g of pectin, 3 g of CaC1₂, and 0.2 g of citric acid. The mixture was heated slowly to 80°C, and allowed to cool to room temperature. The pectin gel that resulted was not sufficiently strong to be useful. 5% Na-alginate solution was set in 0.2 M CaCl₂, and 5% chitosan was gelled in dilute acetic acid (Ca. 4% w/w) and then set in 10% NaOH (w/w). 5% mixtures of agar in water and carrageen in water were heated to about 100°C, and then allowed to cool to set into a stiff gels. 5% solutions of guar and locust bean gum were prepared, and then set with sodium borate solution. Following gelling, the gels were sliced into cubes of approximately 1 cm³ volume. The cubes were then subjected to the solvent exchange and crosslinking procedures described in Example 1, and then dried. To assess the utility, of the various materials, their net shrinkage was measured. Shrinkage was used as a criterion, since as the materials shrink they densify. Therefore, the dimensions of a statistically representative population of the starting cubes (n = 5) were measured using a micrometer, and the dimensions were remeasured after the solvent exchange procedure, after the crosslinking procedure, and after the final drying. As can be seen in Figure 8, the chitosan and sodium alginate show superior properties. The agar and carrageenan displayed minimal shrinkage during the solvent exchange procedure. However, upon drying, these two collapsed to a fraction of their initial volumes. The locust bean and guar gum samples collapsed with the initial solvent exchange procedure. The fact that the agar and carrageenan did not collapse during the solvent exchange procedure also makes them viable candidates for other crosslinking procedures.

### COMPARATIVE EXAMPLE

Using the chitosan crosslinking procedure disclosed in Kokai Patent Publication No. 133143-1986, "Heavy Metal Adsorbing Agent", a sample was prepared.

A material was prepared as described in example 1 of this publication. Shrinkage of the material produced using their protocol was used as a guide to assess collapse of the material. The degree of collapse of their material was compared to those values obtained using our procedures in order to determine the relative performance of the two procedures.

Chitosan, was mixed with dilute acid, such as formic or acetic, makes a gel and then placed in a solution of sodium hydroxide, which coagulates the chitosan to form an opaque, friable material. The coagulated chitosan pellets are placed directly into acetone, and after washing with fresh acetone, added 2,4- tolyene diisocyanate to effect the crosslinking. The chitosan pellets shrank during the initial exposure to acetone. The initial diameters of 20 pellets were measured using a micrometer, and the pellets were remeasured after drying the pellets. The pellets went from an average initial diameter of 2.27 mm to only 1.457 mm after drying, a loss of 57.5% in diameter. Using the procedure of our Example 1 procedure, however, the loss was only about 3.3%.

### EXAMPLE 12

### BINDING OF VARIOUS METALS TO THE CROSSLINKED ALGINATE MATRIX (i.e. POROUS BODY)

Binding of Cd(II), Ni(II). Pb(II), Cu(II) and Cr(III) at varying levels in a mixed-metal aqueous environment.

A 2% (w/v) solution of sodium alginate in distilled water was prepared and allowed to fully hydrate for a period of about 16 hours. The sodium alginate solution was then loaded into a syringe and the viscous solution was introduced dropwise into a beaker containing 0.2 M CaCl₂. The pellets were allowed to set in the CaCl₂ solution for at least 16 Hr, and were then washed in distilled water in order to remove excess CaCl₂. The calcium alginate pellets were then solvent exchanged and crosslinked with 2,4-TDI, essentially as described in EXAMPLE 1. The crosslinked pellets were washed with fresh toluene, and dried in a vacuum oven at 50 C. The dried pellets were then ground using a Wiley bench mill to a particle size sufficiently small to pass through a 0.42 mm (40 mesh) screen. The ground alginate crosslinked matrix was then used for the metal binding studies described below.

Fifty milligrams of ground, crosslinked alginate matrix was weighed into each of 6 test tubes (16 mm by 100 mm). The sorbent matrices were initially pre-wet with 5 ml methanol, and then washed twice with 10 ml of distilled water. Mixed-metal solutions were prepared containing 10 ppm, 100 ppm and 1000 ppm of each of the following metals: Cd(II), Ni(II), Pb(II), Cu(II) and Cr(III). Each mixed-metal solution was adjusted to a pH of 3.6 with dilute nitric acid and then filtered before use in the metal binding assays. Ten ml of each mixed-metal solution was added, in duplicate, to test tubes containing the pre-wet, washed sorbent matrix. A small magnetic stir bar was then added to each tube and the contact mixtures were incubated with stirring for 2 hrs. At the end of the contact period, all the tubes were centrifuged to pellet the sorbent matrices, and the supernatants were carefully removed using Pasteur pipettes. The supernatants were then assayed for Cd, Ni, Pb, Cu and Cr by atomic absorption spectroscopy (AAS). The pellets were digested by acid hydrolysis and the level of each metal in the pellets was determined by AAS. The mixed-metal standard solutions were also assayed by AAS to verify the initial concentration of each metal.

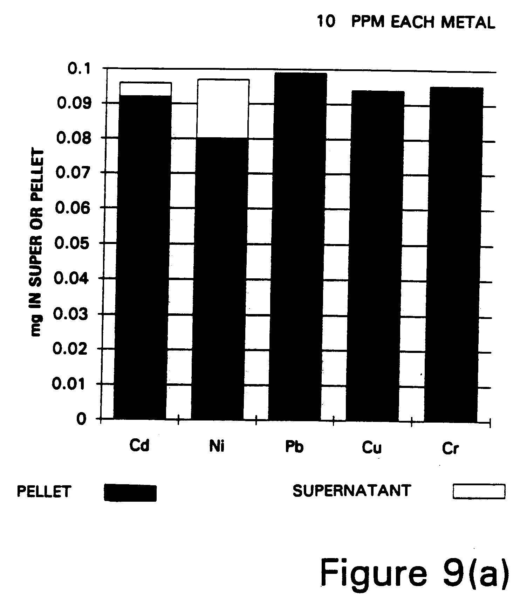

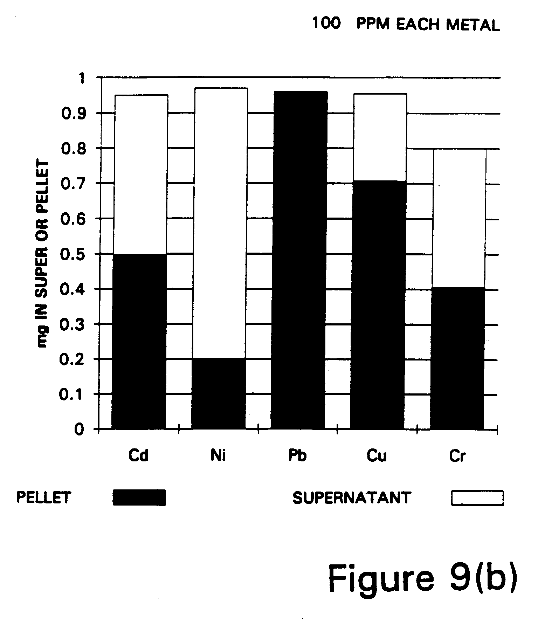

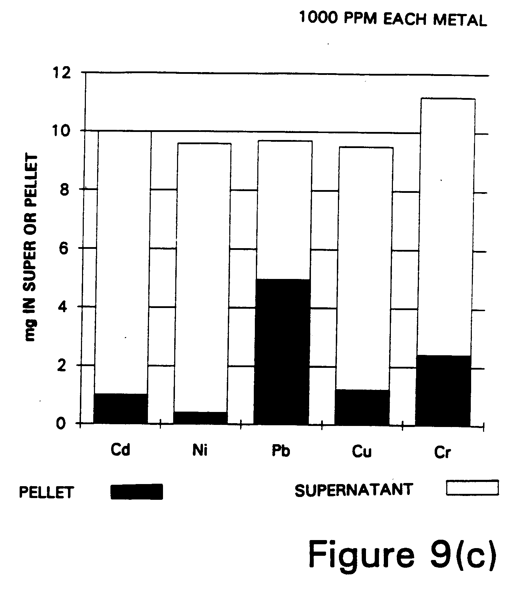

Figure 9 shows the mean values from duplicate analyses of each metal found in the supernatants (crosshatched) and in the pellets (solid) following exposure at the 10, 100 and 1000 ppm levels. As can be seen in this figure, total metal recovery was very good; in most cases at least 95% of the total metal added to the contact mixtures was recovered in the combined pellet and supernatant fractions. Only in one case, Cr(III) at the 100 ppm level, was less than 90% recovery obtained. Following the 2 Hr exposure of the crosslinked alginate matrix to the 10 ppm level, 95 - 100% of all the metals, except Ni, was found to be bound to the pellet fraction. In the case of Ni, 81% of the metal was recovered in the pellet. Essentially all the Pb added at the 100 ppm level was found in the pellet (bound) fraction. The sorbent was found to bind about 70% of the Cu, 50% of the Cd and Cr, and about 20% of the Ni added at this intermediate level. Following exposure at the 1000 ppm level, about 50% of the Pb, 20% of the Cr, 11% of the Cu, 7.5% of the Cd, and about 4% of the Ni was recovered in the bound fraction. The total amount of all metals bound following exposure at the 1000 ppm level was about 9.25 mg, or about 18.5% of the sorbent weight. The amount of each metal bound at the 1000 ppm exposure level, expressed in mg of metal bound per gram of sorbent was as follows: 96 mg/g, Pb; 45.4 mg/g, Cr; 21.8 mg/g, Cu; 14.4 mg/g, Cd; and 7.5 mg/g, Ni. The number of moles of each metal bound following exposure at the 1000 ppm level was as follows: 43.5 µmoles of Cr; 23.1 µmoles of Pb; 17.2 umoles of Cu; and about 6.4 µmoles each of Cd and Ni.

### EXAMPLE 13

### BINDING OF VARIOUS METALS TO THE CROSSLINKED CHITOSAN MATRIX (POROUS BODY)

Binding of Cd(II), Ni(II), Pb(II), Cu(II) and Cr(II, III) in a mixed-metal aqueous environment by crosslinked chitosan matrix.

A 2% (w/v) solution of chitosan-acetate in distilled water was prepared and allowed to fully hydrate. The solution was then introduced dropwise into a solution containing 10% NaOH, resulting in the formation of pellets of the set gel. The pellets were washed in distilled water, and exchanged to toluene and crosslinked with 2,4-TDI, essentially as described in EXAMPLE 3. The crosslinked pellets were then dried, ground to 0.42 mm (40-mesh) particles, pre-wet, and washed as described in EXAMPLE 12.
A mixed-metal solution was prepared containing 10 ppm of each of the following metals: Cd(II), Ni(II), Pb(II), Cu(II) and Cr(II, III). The solution containing all these metals was then adjusted to a pH of 5.4 - 5.5, and was filtered before use. The metal binding experiment was performed essentially as described in EXAMPLE 12.

Figure 11 shows the mean values from the duplicate analyses of each metal found in the supernatants (crosshatched) and in the pellets (solid) following exposure to the mixed-metal solution. Generally, greater than 95% of the added metals could be accounted for in the combined supernatant and pellet fractions of the contact mixtures. All of the recovered Cr and Cu was found bound to the sorbent. About 90% of the recovered Pb and 45-47% of the Cd and Ni was also found bound to the pellet fraction.

### EXAMPLE 14

### BINDING OF URANIUM TO THE CROSSLINKED ALGINATE MATRIX

Eight 50 mg samples of ground, crosslinked alginate, prepared from a 5% calcium alginate gel as described in EXAMPLE 1, were wetted with methanol and washed with distilled water as described in EXAMPLE 12. Standard solutions containing 105 ppm, 251 ppm, 472 ppm and 916 ppm Uranium were prepared from a stock solution containing 975 ppm Uranium (as Uranyl Nitrate). These solutions were adjusted to a pH of 3.9 - 4.0 before use. 100 ml of each solution were added, in duplicate, to the pre-wetted, washed crosslinked alginate sorbent, and incubated at room temperature (about 24°C) with stirring for 2 Hr. At the end of the 2 Hr. equilibration contact period, the supernatants were analyzed for Uranium content by inductively coupled argon plasma emission spectroscopy (ICP), and binding to the sorbent was calculated by difference. Concurrent controls, consisting of Uranium standard solutions in vessels containing no sorbent, were also processed side-by-side with the experimental samples to verify that no background binding occurred.

Results of the Uranium binding experiment are presented in the table below. The figures shown are the mean values from the two observations at each exposure level. Even at the relatively low exposure level of 105 ppm, binding of greater than 187 mg Uranium bound per gram of sorbent was observed. The maximum observed capacity, nearly 280 mg Uranium bound per gram of sorbent or about 28% by weight, was seen at the highest (916 ppm) exposure level.

| URANIUM UPTAKE CAPACITY OF THE CROSSLINKED MATRIX | | | |
|---|---|---|---|
| INITIAL EXPOSURE LEVEL (PPM) | SOLUTION EQUILIBRIUM CONCENTRATION (PPM) | BOUND (MG) | CAPACITY MG BOUND/G SORBENT |
| 105 | 10.7 | 94.3 | 187.3 |
| 251 | 125 | 126 | 250 |
| 472 | 369 | 103 | 204.2 |
| 916 | 776.5 | 139.5 | 279.8 |

### EXAMPLE 15

### USE OF ACTIVE METAL-BINDING AGENTS IMMOBILIZED WITHIN THE CROSSLINKED MATRIX FOR METAL RECOVERY.

Humic acid and tannic acid, natural materials of known metal binding ability, were selected for immobilisation within an alginate crosslinked matrix. A 2% (w/v) solution of sodium alginate in distilled water was made and allowed to fully hydrate. Two grams of humic acid were added to 100 ml of the 2% sodium alginate solution, and two grams of tannic acid were added to another 100 ml of 2% sodium alginate solution. 100 ml of 2% sodium alginate solution, containing no active agent, was processed concurrently with these 'composite gels' to serve as a control. The solutions were mixed well, centrifuged at low speed to remove air bubbles, and then overlayed with 0.2 M CaCl₂ solution to form the calcium alginate composite and control gels. The gels were allowed to set fully for about 48 hr. and then sliced into cubes. The cubes were then soaked in distilled water to remove excess CaCl₂ and soluble fractions of the humic and tannic acids. These gels were then subjected to the solvent exchange and crosslinking procedure as described in EXAMPLE 1. The dried, crosslinked materials were ground using a Wiley bench mill and passed through a stainless steel 0.42 mm (40 mesh) screen before use in the copper binding experiment described below.

The ability of the control and composite crosslinked materials to remove copper ions from aqueous solution was determined according to the following protocol: Duplicate samples of 40 - 50 mg of each material were prewetted and washed as described in EXAMPLE 12. A stock solution of CuSO₄, containing 1000 ppm Cu, was prepared and diluted appropriately with distilled water to yield standard solutions at nominal concentrations of 25, 50, 100 and 250 ppm of Cu. The pH's were adjusted to 5.5, and the exact concentrations were determined by atomic absorption spectroscopy (AAS). Duplicate 100 ml aliquots of each solution were added to erlenmeyer flasks containing prewet, washed sorbent. The flasks were then incubated with shaking for 2 hrs at 30 C. Following this contact period, the supernatants were analyzed for copper content by AAS, and the amount of copper uptake was calculated by difference. Blank vessels were also processed to verify that no background binding occurred.

Results of this copper binding experiment are presented in the tables below. The figures shown are the mean values from two observations at each exposure level. As can be seen in the data below, the inclusion of either humic acid or tannic acid within the crosslinked alginate matrix significantly enhanced the observed capacity for copper binding compared to the crosslinked matrix containing no active agent.

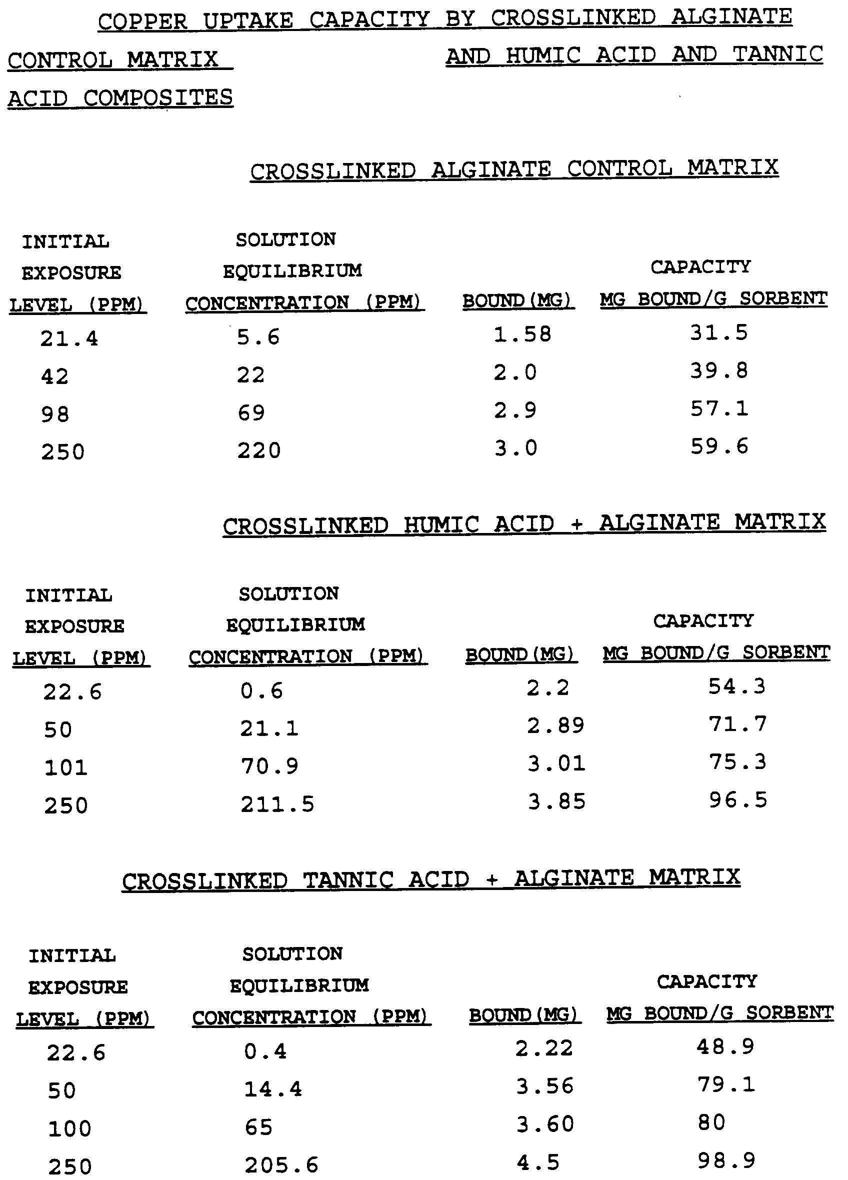

### EXAMPLE 16

### PREPARATION OF CROSSLINKED GELATIN MATRIX

Five grams of gelatin (275 bloom^{*}) were mixed with 100 ml of distilled water and heated to 90 - 100 C with stirring. Upon complete dissolution of the granular gelatin, the solution was allowed to cool to room temperature, thus gelling the proteinaceous material. The gel was then sliced into cubes of approximately 1 cc volume, transferred to a 250 ml round-bottom flask and then subjected to the solvent exchange and crosslinking procedure as described in EXAMPLE 1. The crosslinked product was then washed with fresh toluene, dried in a vacuum oven, and ground to a powder less than 0.42 mm (40 mesh). The table below lists the physical properties of the final material.
* -See Mantell Thomas C.L., Water-Soluble Gums, Reinhold Publishing Co. (New York), 1947, pp. 174 and 209.

| PROPERTIES OF CROSSLINKED GELATIN | |
|---|---|
| Apparent Bulk Density | 0.119 g/cm³ |
| Surface Area | 110 m2/g |
| Pore Volume | 1.31 cm³/g |
| Pore Area | 151 m²/g |
| Average Pore Diameter | 3.5 nm (350 Angstroms) |

## Claims

1. A crosslinked, highly porous body obtainable by crosslinking a water-soluble, hydrogel polymer in the gel phase whereby said porous body has an open-celled three-dimensional lattice structure, a density of 0.01 to 1.0 g/cm³, a surface area of equal to or greater than 85 m²/g, and a compression strength of equal to or less than 50% yield at 2.17 MPa (300 psi) wherein said hydrogel polymer is selected from alginates, gums, agar, gelatins, collagen, polyvinyl alcohol, acrylate polymers, and mixtures and copolymers thereof.

2. A crosslinked, highly porous chitosan body obtainable by crosslinking a chitosan gel in the gel phase, whereby said porous body has an open-celled three-dimensional lattice structure, a density of 0.01 to 0.8 g/cm³, a surface area equal to or greater than 200 m²/g, and a compression strength of equal to or less than 50% yield at 2.17 MPa (300 psi).

3. The crosslinked, highly porous body of Claim 1 wherein said body is derived from a polymeric gel-forming material.

4. The crosslinked, highly porous body of Claim 1 or 2 wherein said body has a pore volume of at least 0.5 cm³/g.

5. The crosslinked, highly porous body of Claim 1 or 2 wherein said body has an average pore diameter of at least 5 nm (50 Ångstroms).

6. The crosslinked, highly porous body of Claim 1 wherein said body has a surface area of at least 200 m²/g.

7. The crosslinked, highly porous body of Claim 1 or 2 wherein said body is crosslinked with a crosslinking agent selected from diisocyanates, diepoxides, epichlorohydrin, aldehydes, dialdehydes, trimetaphosphates, vinyl sulfones, urea-formaldehydes, and di-halogenated aliphatics.

8. The crosslinked, highly porous body of Claim 1 or 2 wherein said body is crosslinked with a diisocyanate.

9. A process for making a cross/inked, highly porous body comprising the steps of:
(a) dissolving a hydrogel polymer in a gelling solvent wherein said hydrogel polymer is selected from alginates, gums, agar, gelatins, collagen, polyvinyl alcohol, acrylate polymers, and mixtures and copolymers therof,
(b) forming a gel from the dissolved polymer solution into a desired configuration,
(c) gradually replacing said gelling solvent with a crosslinking solvent by employing a concentration gradient solvent exchange process,
(d) adding a crosslinking agent to crosslink said gel, and
(e) isolating said crosslinked gel from said crosslinking solvent, whereby said porous body has an open-celled three-dimensional lattice structure, a density of 0.01 to 1.0 g/cm³, a surface area of equal to or greater than 85 m²/g, and a compression strength of equal to or less than 50% yield at 2.17 MPa (300 psi).

10. A process for making a cross/inked, highly porous chitosan body comprising the steps of:
(a) dissolving chitosan in a gelling solvent,
(b) forming a gel from the dissolved chitosan solution into a desired configuration,
(c) gradually replacing said gelling solvent with a crosslinking solvent by employing a concentration gradient solvent exchange process,
(d) adding a crosslinking agent to crosslink said gel, and
(e) isolating said crosslinked gel from said crosslinking solvent, whereby said porous body has an open-celled three-dimensional lattice structure, a density of 0.01 to 0.8 g/cm³, a surface area of equal to or greater than 200 m²/g, and a compression strength of equal to or less than 50% yield at 2.17 MPa (300 psi).

11. A process according to Claim 9 or 10 characterized in that the gelling solvent is replaced with an intermediate solvent, employing a concentration gradient solvent exchange process and the intermediate solvent is replaced by the gelling solvent, employing a concentration gradient solvent exchange process.

12. A process according to Claim 11 characterized in that the intermediate solvent has a surface tension of less than 7.5 N/cm (75 dyne/cm).

13. A process according to any one of Claims 9 to 12 characterized in that the concentration employs an initial concentration of 10 to 25%, and the concentration of the replacing solvent is stepped up at increases of 15 to 25%.

## Patentansprüche

1. Vernetzter, hochporöser Körper, erhältlich durch Vernetzen eines wasserlöslichen Hydrogelpolymers in der Gelphase, wodurch der poröse Körper eine offenzellige, dreidimensionale Gitterstruktur, eine Dichte von 0,01 bis 1,0 g/cm³, eine Oberfläche größer gleich 85 m²/g und eine Druckfestigkeit von kleiner gleich 50% Stauchung bei 2,17 MPa (300 psi) aufweist, wobei das Hydrogelpolymer unter Alginaten, Gummen, Agar, Gelatinen, Kollagen, Polyvinylalkohol, Acrylatpolymeren und deren Gemischen und Copolymeren ausgewählt ist.

2. Vernetzter, hochporöser Chitosankörper, erhältlich durch Vernetzen eines Chitosangels in der Gelphase, wodurch der poröse Körper eine offenzellige, dreidimensionale Gitterstruktur, eine Dichte von 0,01 bis 0,8 g/cm³, eine Oberfläche größer gleich 200 m²/g und eine Druckfestigkeit von kleiner gleich 50% Stauchung bei 2,17 MPa (300 psi) aufweist.

3. Vernetzter, hochporöser Körper nach Anspruch 1, wobei der Körper von einem polymeren gelbildenden Material abgeleitet ist.

4. Vernetzter, hochporöser Körper nach Anspruch 1 oder 2 mit einem Porenvolumen von mindestens 0,5 cm³/g.

5. Vernetzter, hochporöser Körper nach Anspruch 1 oder 2 mit einem mittleren Porendurchmesser von mindestens 5 nm (50 Angstrom).

6. Vernetzter, hochporöser Körper nach Anspruch 1 mit einer Oberfläche von mindestens 200 m²/g.

7. Vernetzter, hochporöser Körper nach Anspruch 1 oder 2, wobei der Körper mit einem Vernetzer, ausgewählt unter Diisocyanaten, Diepoxiden, Epichlorhydrin, Aldehyden, Dialdehyden, Trimetaphosphaten, Vinylsulfonen, Harnstoff-Formaldehyden und dihalogenierten Aliphaten, vernetzt ist.

8. Vernetzter, hochporöser Körper nach Anspruch 1 oder 2, wobei der Körper mit einem Diisocyanat vernetzt ist.

9. Verfahren zur Herstellung eines vernetzten, hochporösen Körpers, bei dem man:
(a) ein Hydrogelpolymer in einem Gelierungslösungsmittel löst, wobei das Hydrogelpolymer unter Alginaten, Gummen, Agar, Gelatinen, Kollagen, Polyvinylalkohol, Acrylatpolymeren und deren Gemischen und Copolymeren ausgewählt ist,
(b) ein aus der Polymerlösung gebildetes Gel in eine gewünschte Gestalt bringt,
(c) das Gelierungslösungsmittel nach einem Konzentrationsgradienten-Lösungsmittelaustauschprozeß schrittweise durch ein Vernetzungslösungsmittel ersetzt,
(d) zur Vernetzung des Gels einen Vernetzer zusetzt und
(e) das vernetzte Gel aus dem Vernetzungslösungsmittel isoliert, wodurch der poröse Körper eine offenzellige, dreidimensionale Gitterstruktur, eine Dichte von 0,01 bis 1,0 g/cm³, eine Oberfläche größer gleich 85 m²/g und eine Druckfestigkeit von kleiner gleich 50% Stauchung bei 2,17 MPa (300 psi) aufweist.

10. Verfahren zur Herstellung eines vernetzten, hochporösen Chitosankörpers, bei dem man:
(a) Chitosan in einem Gelierungslösungsmittel löst,
(b) ein aus der Chitosanlösung gebildetes Gel in eine gewünschte Gestalt bringt,
(c) das Gelierungslösungsmittel nach einem Konzentrationsgradienten-Lösungsmittelaustauschprozeß schrittweise durch ein Vernetzungslösungsmittel ersetzt,
(d) zur Vernetzung des Gels einen Vernetzer zusetzt und
(e) das vernetzte Gel aus dem Vernetzungslösungsmittel isoliert, wodurch der poröse Körper eine offenzellige, dreidimensionale Gitterstruktur, eine Dichte von 0,01 bis 0,8 g/cm³, eine Oberfläche größer gleich 200 m²/g und eine Druckfestigkeit von kleiner gleich 50% Stauchung bei 2,17 MPa (300 psi) aufweist.

11. Verfahren nach Anspruch 9 oder 10, dadurch gekennzeichnet, daß man das Gelierungslösungsmittel nach einem Konzentrationsgradienten-Lösungsmittelaustauschprozeß durch ein Zwischenlösungsmittel ersetzt und das Zwischenlösungsmittel nach einem Konzentrationsgradienten-Lösungsmittelaustauschprozeß durch ein Gelierungslösungsmittel ersetzt.

12. Verfahren nach Anspruch 11, dadurch gekennzeichnet, daß man ein Zwischenlösungsmittel mit einer Oberflächenspannung von weniger als 7,5 N/cm (75 dyn/cm) einsetzt.

13. Verfahren nach einem der Ansprüche 9 bis 12, dadurch gekennzeichnet, daß man mit einer Anfangskonzentration von 10 bis 25% beginnt und die Konzentration des Ersatzlösungsmittels in Schritten von 15 bis 25% erhöht.

## Revendications

1. Corps réticulé de porosité élevée qui peut être obtenu par réticulation d'un hydrogel polymère soluble dans l'eau en phase de gel, de sorte que ledit corps poreux a une structure tridimensionnelle en réseau à cellules ouvertes, un poids spécifique de 0,01 à 1,0 g/cm³, une surface spécifique égale ou supérieure à 85 m²/g et une résistance à la compression égale ou inférieure à 50% sous une sollicitation de 2,17 MPa (300 psi), corps dans lequel ledit hydrogel polymère est sélectionné parmi les alginates, les gommes, l'agar, les gélatines, le collagène, l'alcool polyvinylique, les polymères d'acrylates et leurs mélanges et leurs copolymères.

2. Corps de chitosane réticulé de porosité élevée qui peut être obtenu par réticulation d'un gel de chitosane en phase de gel, de sorte que ledit corps poreux a une structure tridimensionnelle en réseau à cellules ouvertes, un poids spécifique de 0,01 à 0,8 g/cm³, une surface spécifique égale ou supérieure à 200 m²/g et une résistance à la compression égale ou inférieure à 50% sous une sollicitation de 2,17 MPa (300 psi).

3. Corps réticulé de porosité élevée selon la revendication 1, dans lequel ledit corps est dérivé d'un matériau polymère formateur de gel.

4. Corps réticulé de porosité élevée selon la revendication 1 ou 2, dans lequel ledit corps a un volume de pores d'au moins 0,5 cm³/g.

5. Corps réticulé de porosité élevée selon la revendication 1 ou 2, dans lequel ledit corps a un diamètre moyen de pores d'au moins 5 nm (50 angströms).

6. Corps réticulé de porosité élevée selon la revendication 1, dans lequel ledit corps a une surface spécifique d'au moins 200 m²/g.

7. Corps réticulé de porosité élevée selon la revendication 1 ou 2, dans lequel ledit corps est réticulé par un agent de réticulation sélectionné parmi les diisocyanates, les diépoxydes, l'épichlorhydrine, les aldéhydes, les dialdéhydes, les trimétaphosphates, les sulfones vinyliques, les urée-formaldéhydes et les matériaux aliphatiques dihalogénés.

8. Corps réticulé de porosité élevée selon la revendication 1 ou 2, dans lequel ledit corps est réticulé par un diisocyanate.

9. Procédé de préparation d'un corps réticulé de porosité élevée comprenant les étapes consistant :
(a) à dissoudre un hydrogel polymère dans un solvant de gélification, ledit hydrogel polymère étant sélectionné parmi les alginates, les gommes, l'agar, les gélatines, le collagène, l'alcool polyvinylique, les polymères d'acrylates et leurs mélanges et leurs copolymères;
(b) à former un gel à partir de la solution de polymère dissous dans une configuration souhaitée;
(c) à remplacer graduellement ledit solvant de gélification par un solvant de réticulation en employant un procédé d'échange de solvant par gradient de concentration;
(d) à ajouter un agent de réticulation pour réticuler ledit gel; et
(e) à isoler ledit gel réticulé dudit solvant de réticulation, de sorte que ledit corps poreux a une structure tridimensionnelle en réseau à cellules ouvertes, un poids spécifique de 0,01 à 1,0 g/cm³, une surface spécifique égale ou supérieure à 85 m²/g et une résistance à la compression égale ou inférieure à 50% sous une sollicitation de 2,17 MPa (300 psi).

10. Procédé de préparation d'un corps de chitosane réticulé de porosité élevée comprenant les étapes consistant :
(a) à dissoudre du chitosane dans un solvant de gélification;
(b) à former un gel à partir de la solution de chitosane dissous dans une configuration souhaitée;
(c) à remplacer graduellement ledit solvant de gélification par un solvant de réticulation en employant un procédé d'échange de solvant par gradient de concentration;
(d) à ajouter un agent de réticulation pour réticuler ledit gel; et
(e) à isoler ledit gel réticulé dudit solvant de réticulation, de sorte que ledit corps poreux a une structure tridimensionnelle en réseau à cellules ouvertes, un poids spécifique de 0,01 à 0,8 g/cm³, une surface spécifique égale ou supérieure à 200 m²/g et une résistance à la compression égale ou inférieure à 50% sous une sollicitation de 2,17 MPa (300 psi).

11. Procédé selon la revendication 9 ou 10, caractérisé en ce que le solvant de gélification est remplacé par un solvant intermédiaire en utilisant un procédé d'échange de solvant par gradient de concentration et le solvant intermédiaire est remplacé par le solvant de gélification en employant un procédé d'échange de solvant par gradient de concentration.

12. Procédé selon la revendication 11, caractérisé en ce que le solvant intermédiaire a une tension superficielle inférieure à 7,5 N/cm (75 dynes/cm).

13. Procédé selon l'une quelconque des revendications 9 à 12, caractérisé en ce que la concentration utilise une concentration initiale de 10 à 25% et la concentration du solvant de remplacement est augmentée par stades de 15 à 25%.
